# EUROPEAN PATENT APPLICATION

(11) **EP 4 751 866 A1**
(43) Date of publication of application: **03.06.2026**
(21) Application number: 24845144.5
(22) Date of filing: 13.05.2024
(51) Int. Cl.: B25J 17/02

(54) **ROBOT SYSTEM**

(30) Priority: 27.07.2023 JP 2023122845
(71) Applicant: KAWASAKI JUKOGYO KABUSHIKI KAISHA, Kobe-shi, Hyogo 650-8670 (JP)
(72) Inventor: ORYU Tamami, Kobe-shi, Hyogo 6508670 (JP); SATO Eiji, Kobe-shi, Hyogo 6508670 (JP); AIBE Toru, Kobe-shi, Hyogo 6508670 (JP); FUKUDA Hiroaki, Kobe-shi, Hyogo 6508670 (JP); MURASE Yohei, Kobe-shi, Hyogo 6508670 (JP); TANAKA Yuichiro, Kobe-shi, Hyogo 6508670 (JP); MATSUURA Takeshi, Kobe-shi, Hyogo 6508670 (JP); KIMOTO Kensuke, Kobe-shi, Hyogo 6508670 (JP)
(74) Representative: Müller-Boré & Partner Patentanwälte PartG mbB
(86) International application number: PCT/JP2024/017614
(87) International publication number: WO 2025/022760

(57) **Abstract**

A robot system 100 includes: a robot 1; and a controller 9 that controls the robot 1, the robot 1 includes a robot arm 2 that extends and contract in a predetermined first direction X, a wrist 4 coupled to the robot arm 2, and a hand 3 coupled to the wrist 4, the wrist 4 moves the hand 3 in a second direction Z intersecting the first direction X, the controller 9 causes the robot 1 to perform an advancing motion of moving the wrist 4 and the hand 3 in the first direction X by extending the robot arm 2 in the first direction X, and a lifting/lowering motion of moving the hand 3 in the second direction Z by the wrist 4 after the advancing motion.

## Description

### FIELD

The technique disclosed here relates to a robot system.

### BACKGROUND

A robot including a robot arm and a hand is known to date. Patent Document 1, for example, discloses a robot in which a hand is attached to the distal end of a robot arm. This robot picks up workpieces from component boxes on a component shelf with the hand. The robot inserts the hand into a narrow space in the component shelf. The hand performs a lifting/lowering motion and a pitch motion from that state.

### CITATION LIST

### PATENT DOCUMENT

Patent Document 1: Japanese Patent Application Publication No. 2014-124716

### SUMMARY

In the case of performing work in such a narrow space in the shelf as described above, motion of the robot, for example, movement of the robot arm, is limited. In an environment where motion of the robot is limited, flexibility of work is enhanced by enlarging a movement range of the hand.

It is therefore an object of the technique disclosed here to enlarge a movement range of the hand in a narrow space.

A robot system disclosed here includes: a robot; and a controller that controls the robot, the robot includes a robot arm that extends and contracts in a predetermined first direction, a wrist coupled to the robot arm, and a hand coupled to the wrist, the wrist moves the hand in a second direction intersecting the first direction, and the controller causes the robot to perform an advancing motion of moving the wrist and the hand in the first direction by extending the robot arm in the first direction, and a lifting/lowering motion of moving the hand in the second direction by the wrist after the advancing motion.

The robot system can enlarge a movement range of the hand in a narrow space.

### BRIEF DESCRIPTION OF THE DRAWINGS

[FIG. 1] FIG. 1 is a schematic view illustrating a robot system.
[FIG. 2] FIG. 2 is a schematic view for describing movement of a wrist and a hand in a container during transfer work.
[FIG. 3] FIG. 3 is a perspective view of the wrist in a basic state.
[FIG. 4] FIG. 4 a side view of the wrist in the basic state.
[FIG. 5] FIG. 5 is a plan view of the wrist in the basic state.
[FIG. 6] FIG. 6 is a cross-sectional view of the wrist taken along line VI-VI in FIG. 5.
[FIG. 7] FIG. 7 is a side view of the wrist in an advanced state.
[FIG. 8] FIG. 8 is a side view of the wrist in a state where the hand is most advanced in a second direction.
[FIG. 9] FIG. 9 is a perspective view of the wrist in the state where the hand is most advanced in the second direction.
[FIG. 10] FIG. 10 is a side view of the wrist after a pitch motion.
[FIG. 11] FIG. 11 is a side view of the wrist 4 in a case where the hand is most advanced in the second direction and a pitch angle is 90 degrees.
[FIG. 12] FIG. 12 is a perspective view of the wrist after a roll motion.
[FIG. 13] FIG. 13 is a front view of the wrist in a state where the linkage is rotated about a roll axis.
[FIG. 14] FIG. 14 is a side view of the wrist after a yaw motion.
[FIG. 15] FIG. 15 is a view illustrating a schematic hardware configuration of a controller.
[FIG. 16] FIG. 16 is a block diagram illustrating a configuration of a control system of the controller.
[FIG. 17] FIG. 17 is a side view of the hand and the wrist in an advancing motion.
[FIG. 18] FIG. 18 is a side view of the hand and the wrist in a lifting/lowering motion.
[FIG. 19] FIG. 19 is a side view of the hand and the wrist before a retracting motion.
[FIG. 20] FIG. 20 is a side view of the hand and the wrist in a state where a posture of the hand about a pitch axis is changed before the advancing motion.
[FIG. 21] FIG. 21 is a front view of the hand and the wrist when the rotation posture of the hand in the advancing motion is changed by a roll motion.
[FIG. 22] FIG. 22 is a front view of the hand and the wrist in a state where the linkage is rotated about the roll axis.
[FIG. 23] FIG. 23 is a front view of the hand and wrist located above the container.
[FIG. 24] FIG. 24 is a front view of the hand and the wrist after the roll motion.
[FIG. 25] FIG. 25 is a front view of the hand and the wrist after a straight-traveling motion.
[FIG. 26] FIG. 26 is a side view of the hand and the wrist before a yaw motion in picking adjacent workpieces.
[FIG. 27] FIG. 27 is a side view of the hand and the wrist after the yaw motion in picking adjacent workpieces.
[FIG. 28] FIG. 28 is a side view of the hand and the wrist in a state where the hand is retracted in the second direction while gripping a workpiece.
[FIG. 29] FIG. 29 is a side view of the hand and the wrist in a state where the hand gripping a workpiece is rotated about a pitch axis.
[FIG. 30] FIG. 30 is a front view of the hand and the wrist in a case where the rotation posture of the hand in the retracting motion is changed by the roll motion.

### DESCRIPTION OF EMBODIMENTS

An exemplary embodiment will be described in detail hereinafter with reference to the drawings. In the present disclosure, the terms "parallel," "orthogonal," and "identical" include not only "strictly parallel," "strictly orthogonal," and "strictly identical," but also "substantially parallel," "substantially orthogonal," and "substantially identical."

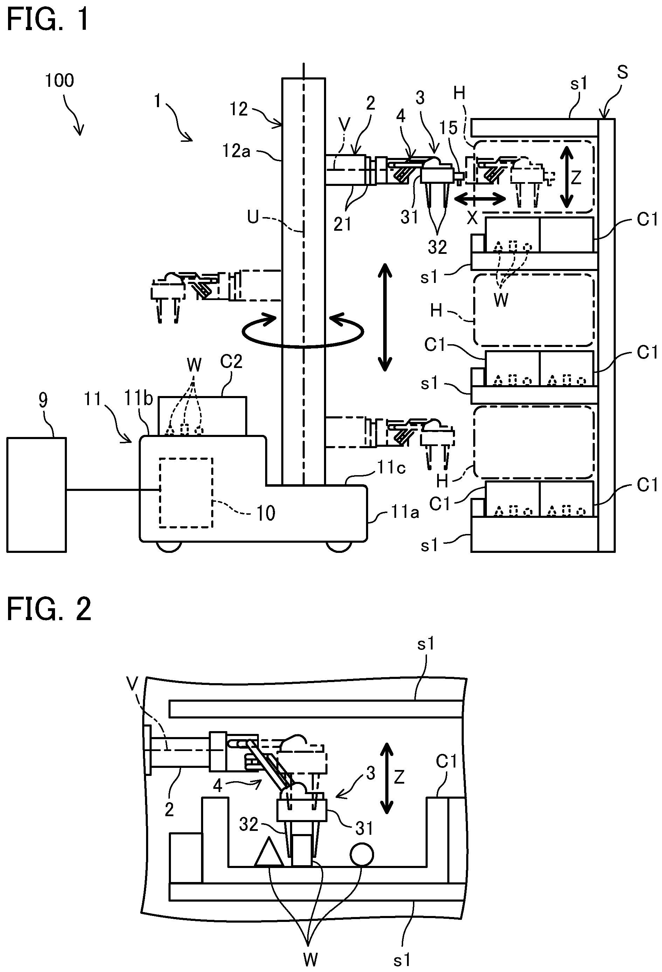

FIG. 1 is a schematic view illustrating a robot system 100. FIG. 1 is a schematic view illustrating a robot system 100. The robot system 100 includes a robot 1, and a controller 9 that controls the robot 1. For example, the robot 1 performs transfer work. For example, the robot 1 performs transfer work. Specifically, the robot 1 takes a workpiece W from a first container C1 placed on a shelf S and transfers the workpiece W to a second container C2. The first container C1 is a source container that accommodates the workpiece W. The second container C2 is a destination container that accommodates the workpiece W.

The shelf S includes shelf boards s1 arranged with intervals in the top-bottom direction. The first containers C1 are placed on the shelf boards s1. In the shelf S, a work space H where the robot arm 2 can enter is defined between each first container C1 and the shelf board s1 located above the first container C1.

The robot 1 includes a robot arm 2 that extends and contracts in a predetermined first direction X, a wrist 4 coupled to the robot arm 2, and a hand 3 coupled to the wrist 4. The wrist 4 moves the hand 3 in a second direction Z intersecting the first direction X. The controller 9 uses the robot arm 2 and the wrist 4 to flexibly move the hand 3 in a narrow space.

The robot 1 further includes a mobile base 11 and a lifter 12 located on the mobile base 11 and supporting the robot arm 2 to enable lifting and lowering of the robot arm 2 in a predetermined third direction.

The robot 1 moves by traveling of the mobile base 11. The mobile base 11 is, for example, an automated guided vehicle (AGV). The mobile base 11 includes a box-shaped body 11a. The body 11a includes at least an upper surface 11b and a recess 11c that is recessed downward from the upper surface 11b. In this example, the second container C2 is mounted on the upper surface 11b. That is, upper surface 11b is a mounting surface for a container and others.

The lifter 12 raises and lowers the robot arm 2 and turns the robot arm 2. The lifter 12 is located in the recess 11c. In this example, the lifter 12 has a mast 12a. The mast 12a has an axis extending in the top-bottom direction. The axis of the mast 12a is also referred to as an elevation axis U. The mast 12a is attached to the mobile base 11 to be rotatable about the elevation axis U. The mast 12a is located in the recess 11c. The mast 12a supports the robot arm 2 such that the robot arm 2 can move along the elevation axis U. The direction of the elevation axis U is the third direction. The lifter 12 lowers the robot arm 2 to a position below the upper surface 11b. The lifter 12 includes a linear actuator that moves the robot arm 2 along the elevation axis U, and a rotation actuator that rotates the mast 12a about the elevation axis U. That is, the lifter 12 moves the robot arm 2 along the elevation axis U by the linear actuator. The lifter 12 turns the mast 12a, and accordingly, the robot arm 2 about the elevation axis U by the rotation actuator.

The robot arm 2 is a linear extension and contraction arm. The robot arm 2 extends and contracts in the direction of a predetermined advancing/retracting axis V. The robot arm 2 moves the wrist 4 and the hand 3 by extension and contraction. Specifically, the robot arm 2 includes tubular arm housings 21. The axis of each of the arm housings 21 coincides with the advancing/retracting axis V. The arm housings 21 are nested. The arm housings 21 are movable relative to each other along the advancing/retracting axis V. The robot arm 2 includes a linear actuator that moves the arm housings 21 relative to each other. The relative movement of the arm housings 21 along the advancing/retracting axis V causes the robot arm 2 to extend and contract along the advancing/retracting axis V. The direction of the advancing/retracting axis V is the first direction X.

The robot arm 2 is supported by the lifter 12 with the advancing/retracting axis V intersecting the elevation axis U. Specifically, the advancing/retracting axis V is orthogonal to the elevation axis U. The advancing/retracting axis V may be located at a position skewed with respect to the elevation axis U.

The wrist 4 moves the hand 3 in the second direction Z with respect to the robot arm 2. The wrist 4 is attached to the distal end of the robot arm 2.

The hand 3 holds a workpiece W. The hand 3 may hold an object in any form. For example, holding by the hand 3 may be gripping or suction. In this example, the hand 3 grips the workpiece W. The hand 3 includes a hand body 31 and fingers 32 attached to the hand body 31. The hand 3 includes an actuator that opens and closes the fingers 32. The hand 3 opens and closes the fingers 32.

The robot 1 may further include a camera 15. The camera 15 is shown only in FIG. 1. In this example, the camera 15 is attached to the hand 3, more specifically, the hand body 31. The camera 15 acquires an image in the first container C1. The camera 15 acquires an image including workpieces W in the first container C1. Here, the image is either a two-dimensional image or a three-dimensional image. Examples of the three-dimensional image include point group data, RGB-D images, RGB images, depth images, and voxels. In other words, the camera 15 may be a three-dimensional camera, that is, an RGB-D camera that outputs RGB-D images, a stereo camera that acquires RGB images, or a three-dimensional vision sensor that acquires point group data, for example.

Transfer work by the robot 1 will be briefly described. FIG. 2 is a schematic view for describing movement of the wrist 4 and the hand 3 in a container during transfer work. As illustrated in FIG. 1, the robot 1 moves to a position facing the shelf S by traveling of the mobile base 11. The lifter 12 moves the robot arm 2 such that the hand 3 is located at a position facing a work space H between the target first container C1 and the shelf board s1 located above the target first container C1.

Next, the robot 1 extends the robot arm 2 to bring the robot arm 2 into the work space H. Accordingly, the wrist 4 and the hand 3 enter the work space H. The hand 3 is moved to a position above the workpiece W to be picked in the first container C1.

Subsequently, as illustrated in FIG. 2, the robot 1 moves the hand 3 into the first container C1. For example, the robot 1 moves the hand 3 via the wrist 4 in the second direction Z to cause the hand 3 to enter the first container C1. Then, the robot 1 grips the workpiece W to be picked up with the fingers 32 of the hand 3.

When the gripping is completed, the robot 1 moves the hand 3 to a position above the first container C1, that is, to the work space H. From this state, the robot 1 contracts the robot arm 2 and retracts the hand 3 from the work space H together with the workpiece W.

Thereafter, the lifter 12 turns and raises and lowers the robot arm 2 again to move the hand 3 to a position above the second container C2. The robot 1 moves the hand 3 into the second container C2. The robot 1 places the workpiece W in the second container C2 by releasing gripping of the workpiece W with the fingers 32 of the hand 3.

In this manner, the workpiece W to be picked is transferred from the first container C1 to the second container C2.

### =Wrist=

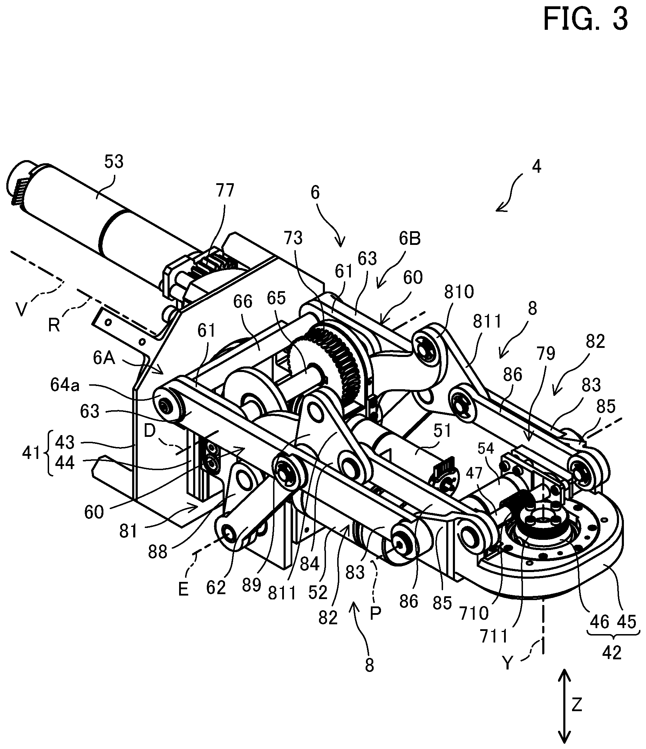

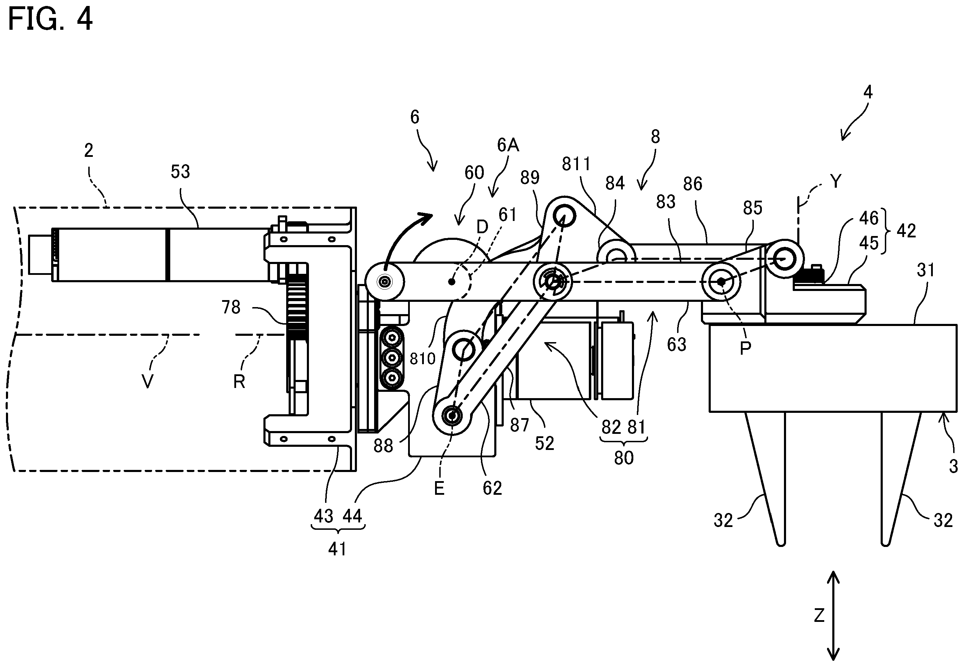

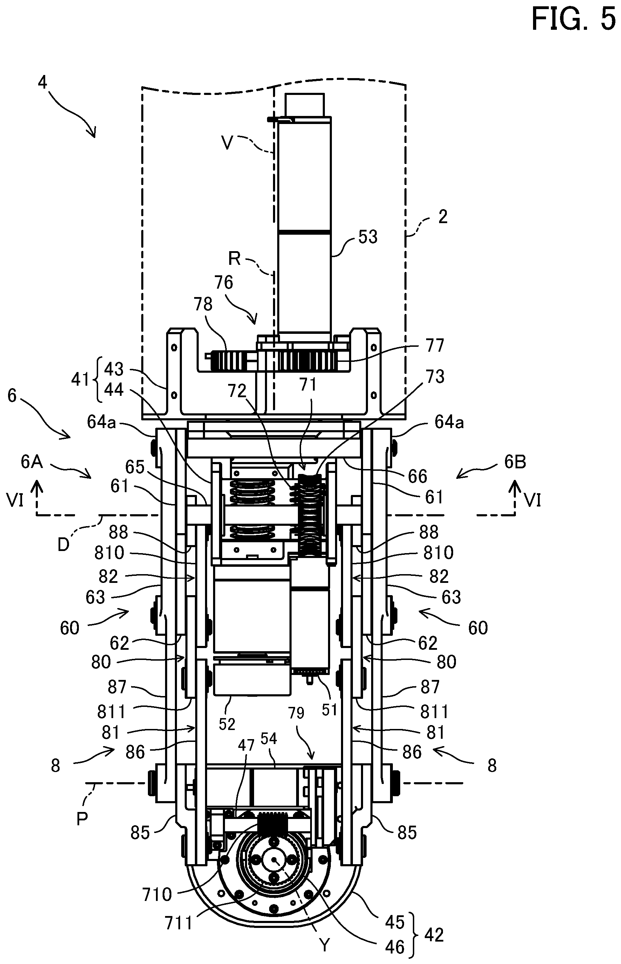

Next, the wrist 4 will be described in detail. FIG. 3 is a perspective view of the wrist 4 in a basic state. FIG. 4 is a side view of the wrist 4 in the basic state. FIG. 5 is a plan view of the wrist 4 in the basic state. In FIGS. 3 and 5, the hand 3 is omitted.

The wrist 4 moves the hand 3 in the second direction Z. The wrist 4 includes a first base 41 attached to the robot arm 2, a second base 42 to which the hand 3 is attached, a linkage 6 movably coupling the second base 42 to the first base 41, and a first actuator 51 that drives the linkage 6. The wrist 4 is attached to the robot arm 2 via the first base 41. The hand 3 is attached to the wrist 4 via the second base 42. The first base 41 and the second base 42 are coupled to each other via the linkage 6. The first actuator 51 drives the linkage 6 so that the second base 42 thereby moves relative to the first base 41. That is, the hand 3 moves relative to the robot arm 2.

The linkage 6 includes a Chebyshev linkage 60 coupling the second base 42 to the first base 41 such that the second base 42 linearly moves in the predetermined second direction Z. The first actuator 51 drives a link included in the Chebyshev linkage 60 to thereby move the second base 42, that is, the hand 3, linearly in the second direction Z.

The linear movement of the second base 42 by the Chebyshev linkage 60 is not limited to strictly linear movement and may be substantially linear movement. In this example, the linear movement of the second base 42 is substantially linear movement along the second direction Z. The second direction Z is a direction that intersects the advancing/retracting axis V of the robot arm 2, specifically, a direction orthogonal to the advancing/retracting axis V. That is, the wrist 4 linearly moves the hand 3 in the direction intersecting an advancing/retracting direction of the robot arm 2 via the linkage 6.

The wrist 4 also performs a pitch motion, a roll motion, and a yaw motion, as well as the straight-traveling motion. The wrist 4 rotatably supports the hand 3 such that the hand 3 is rotatable about the pitch axis P extending in a direction intersecting both the first direction X and the second direction Z. The wrist 4 rotatably supports the hand 3 such that the hand 3 is rotatable about the roll axis R extending in the first direction X. Specifically, the wrist 4 is rotatable about the roll axis R. The wrist 4 rotatably supports the hand 3 about the yaw axis Y extending in a direction intersecting the first direction X. Specifically, the wrist 4 includes a second actuator 52 that rotates the second base 42 about a pitch axis P extending in a direction intersecting the second direction Z, and a pitch transfer 8 that transfers a driving force of the second actuator to the second base 42. The wrist 4 further includes a third actuator 53 that rotates the second base 42 about a roll axis R extending in a direction intersecting both the direction of the pitch axis P and the second direction Z. The wrist 4 further includes a fourth actuator 54 that rotates the hand 3 about a predetermined yaw axis Y and a yaw transfer 79 that transfers a driving force of the fourth actuator 54. The basic state of the wrist 4 is a state serving as a basis in a straight-traveling motion, a pitch motion, a roll motion, and a yaw motion.

### =First Base=

The first base 41 includes a base body 43 attached to the robot arm 2 and a rotation body 44 rotatably coupled to the base body 43. The base body 43 is fixed to a distal end (an end opposite to the lifter 12 in this example) of the robot arm 2. The rotation body 44 is coupled to the base body 43 via a bearing to be rotatable about the roll axis R. In this example, the roll axis R is parallel to the advancing/retracting axis V, more specifically, is aligned with the advancing/retracting axis V in a straight line. The linkage 6 is attached to the rotation body 44.

### =Second Base=

The second base 42 includes a base body 45 attached to the linkage 6 and a rotation body 46 rotatably coupled to the base body 45. The rotation body 46 is coupled to the base body 45 via a bearing to be rotatable about the yaw axis Y. As illustrated in FIG. 4, the hand 3 is attached to the rotation body 46. When the rotation body 46 rotates with respect to the base body 45, the hand 3 also rotates about the yaw axis Y with respect to the base body 45, together with the rotation body 46.

### =Linkage=

The linkage 6 includes a pair of a first linkage 6A and a second linkage 6B facing each other. Each of the first linkage 6A and the second linkage 6B movably couples the second base 42 to the first base 41. Each of the first linkage 6A and the second linkage 6B includes the Chebyshev linkage 60. The first linkage 6A and the second linkage 6B have the same configuration. The first linkage 6A and the second linkage 6B perform the same operation to move the second base 42.

The linkage 6 is coupled to the first base 41 to be rotatable about the roll axis R. Specifically, the linkage 6 is attached to the rotation body 44 of the first base 41. Rotation of the rotation body 44 about the roll axis R causes the linkage 6 to rotate about the roll axis R. The rotation of the linkage 6 about the roll axis R also causes the hand 3 to rotate about the roll axis R together with the second base 42.

### =Chebyshev Linkage=

The Chebyshev linkage 60 includes a driving link 61, a driven link 62, and an intermediate link 63. The driving link 61 is coupled to the first base 41 to be rotatable about a predetermined driving axis D and is rotationally driven. The driven link 62 is coupled to the first base 41 to be rotatable about an axis parallel to the driving axis D. The intermediate link 63 is coupled to each of the driving link 61 and the driven link 62 to be rotatable about an axis parallel to the driving axis D. Specifically, a shaft 65 is supported by the first base 41 to be rotatable about the axis of the shaft 65. The rotation axis of the shaft 65 is the driving axis D. The driving link 61 is non-rotatably coupled to the shaft 65. That is, the driving link 61 is coupled to the first base 41 via the shaft 65 to be rotatable about the driving axis D. The driving link 61 and the shaft 65 are coupled to the rotation body 44 of the first base 41. The driven link 62 is coupled to the rotation body 44 of the first base 41. The rotation axis of the driven link 62 is separated from the driving axis D of the driving link 61 in a direction parallel to the second direction Z. The second base 42, specifically, the base body 45, is coupled to the intermediate link 63. The driven link 62 is coupled to a portion between a portion coupled to the driving link 61 and a portion coupled to the second base 42 in the intermediate link 63. When the driving link 61 is rotationally driven, the driven link 62 and the intermediate link 63 move in conjunction, and the second base 42 moves.

In the Chebyshev linkage 60, a portion of the intermediate link 63 coupled to the second base 42 approximately linearly moves in accordance with rotation of the driving link 61 by appropriately setting the link length of each link. Specifically, suppose the link length of the driving link 61 is 1, the link length of the driven link 62 is 2.5, a distance between a portion coupled to the driving link 61 and a portion coupled to the driven link 62 in the intermediate link 63 is 2.5, a distance between a portion coupled to the driven link 62 and a portion coupled to the second base 42 in the intermediate link 63 is 2.5, and a distance between the driving axis D of the driving link 61 and the rotation axis of the driven link 62 is 2. Accordingly, when the driving link 61 is rotationally driven, a portion of the intermediate link 63 coupled to the second base 42, that is, the second base 42, linearly moves. The direction of movement of the second base 42 substantially coincides with the second direction Z.

The first linkage 6A and the second linkage 6B face each other in the direction of the driving axis D. That is, the direction in which the first linkage 6A and the second linkage 6B face each other coincides with the direction of the driving axis D. In the direction of the driving axis D, the driving link 61 of the first linkage 6A and the driving link 61 of the second linkage 6B face each other, the driven link 62 of the first linkage 6A and the driven link 62 of the second linkage 6B face each other, and the intermediate link 63 of the first linkage 6A and the intermediate link 63 of the second linkage 6B face each other.

More specifically, each two links coupled to each other in the linkage overlap the direction of the driving axis D at the joint, and thus, are located at offset positions in the direction of the driving axis D. As illustrated in FIG. 5, the driving link 61 of the first linkage 6A is located inward of the intermediate link 63 of the first linkage 6A in the direction in which the first linkage 6A and the second linkage 6B face each other. The driving link 61 of the second linkage 6B is located inward of the intermediate link 63 of the second linkage 6B in the direction in which the first linkage 6A and the second linkage 6B face each other. That is, the driving link 61 of the first linkage 6A and the driving link 61 of the second linkage 6B are located between the intermediate link 63 of the first linkage 6A and the intermediate link 63 of the second linkage 6B. In the links of the first linkage 6A and the second linkage 6B, the intermediate link 63 of the first linkage 6A and the intermediate link 63 of the second linkage 6B are located at outermost sides in the direction in which the first linkage 6A and the second linkage 6B face each other.

The driving link 61 of the first linkage 6A and the driving link 61 of the second linkage 6B are coupled to the common shaft 65.

The intermediate link 63 of the first linkage 6A and the intermediate link 63 of the second linkage 6B are coupled to each other. Specifically, as illustrated in FIG. 5, a joint 64a coupling the driving link 61 and the intermediate link 63 in the first linkage 6A is coupled to a joint 64a coupling the driving link 61 and the intermediate link 63 in the second linkage 6B. More specifically, the joint 64a of the first linkage 6A and the joint 64a of the second linkage 6B are coupled to each other via a shaft 66 extending in parallel with the driving axis D. The driving link 61 and the intermediate link 63 of the first linkage 6A are rotatably coupled to one end of the shaft 66. The driving link 61 and the intermediate link 63 of the second linkage 6B are rotatably coupled to the other end of the shaft 66.

### =First Actuator=

The first actuator 51 is an electric motor, specifically, a servo motor. The first actuator 51 includes an encoder. The first actuator 51 is attached to the first base 41, more specifically, the rotation body 44. As illustrated in FIG. 5, the first actuator 51 is located between the first linkage 6A and the second linkage 6B.

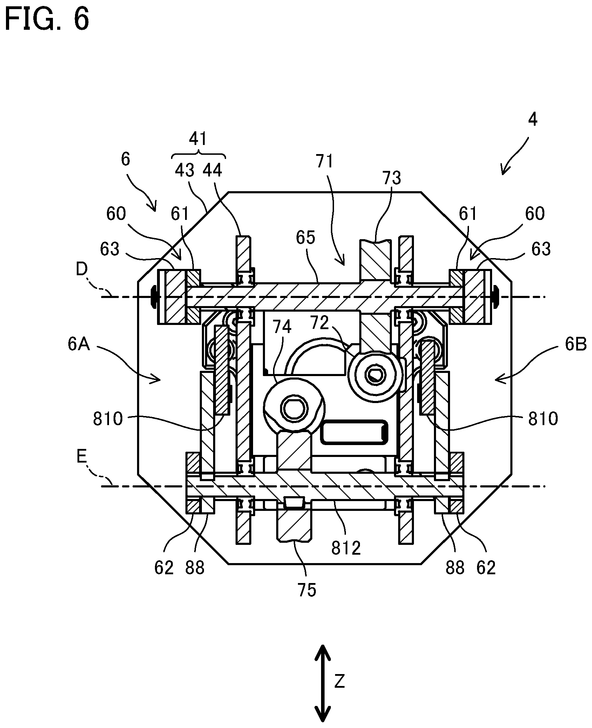

FIG. 6 is a cross-sectional view of the wrist 4 taken along line VI-VI in FIG. 5. Rotation of the first actuator 51 is transferred to the Chebyshev linkage 60 via a straight-traveling transfer 71. The straight-traveling transfer 71 includes a worm gear. Specifically, the straight-traveling transfer 71 includes a worm 72 attached to an output shaft of the first actuator 51 and a worm wheel 73 coupled to the driving link 61 of the Chebyshev linkage 60 and meshing with the worm 72. The worm 72 rotates integrally with the output shaft. The worm wheel 73 is non-rotatably attached to the shaft 65. That is, the worm wheel 73 is coupled to the driving link 61 via the shaft 65.

When the first actuator 51 moves, the worm 72 rotates. The worm wheel 73 rotates in conjunction with the worm 72, and the shaft 65 rotates integrally with the worm wheel 73. Since the driving link 61 is non-rotatably coupled to the shaft 65, the driving link 61 rotates about the driving axis D integrally with the shaft 65. In this manner, the Chebyshev linkage 60 is driven by the first actuator 51. Since the driving links 61 of both the first linkage 6A and the second linkage 6B are coupled to the shaft 65, the Chebyshev linkage 60 of the first linkage 6A and the Chebyshev linkage 60 of the second linkage 6B move integrally.

### =Linear Movement=

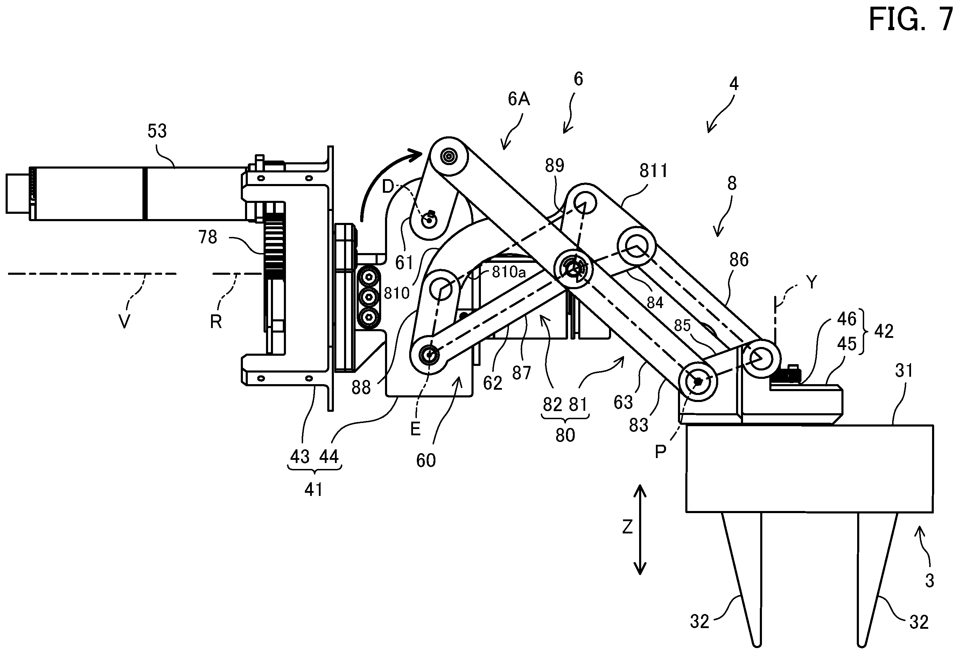

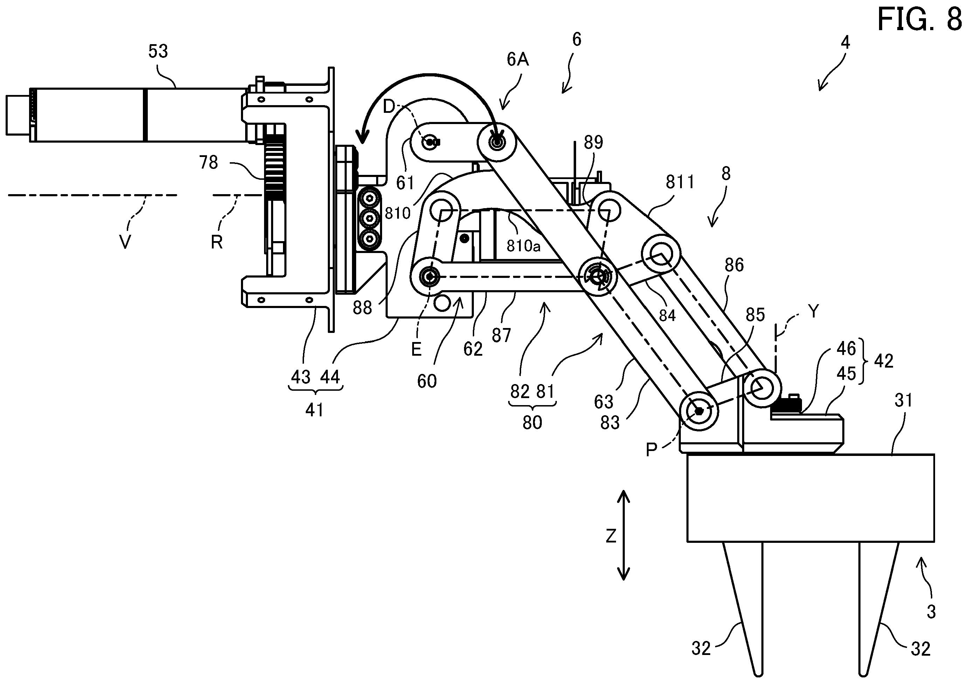

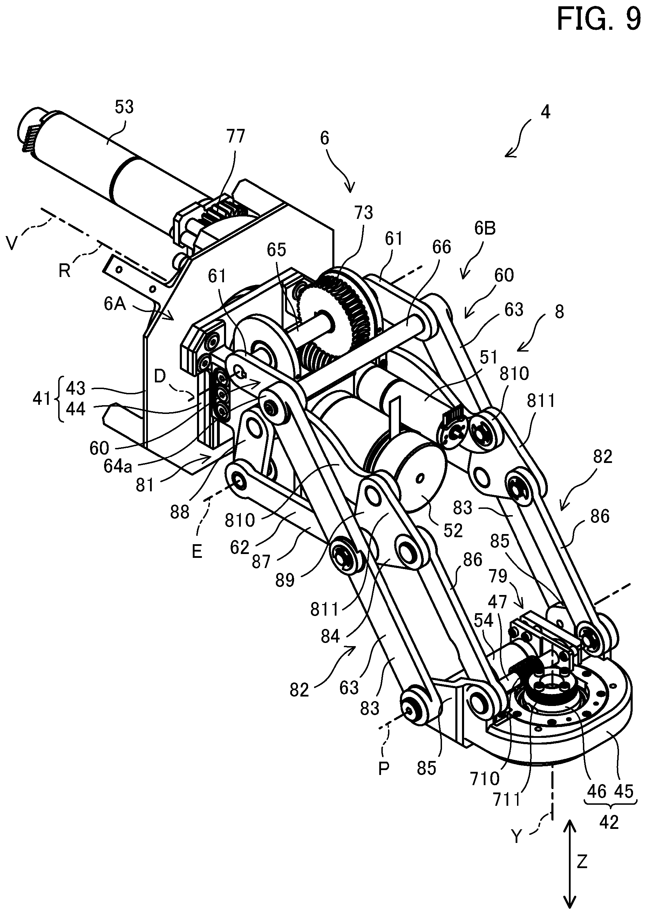

Movement of the wrist 4 by the Chebyshev linkage 60 will be described in detail. FIG. 7 is a side view of the wrist 4 in an advanced state. FIG. 8 is a side view of the wrist 4 in a state where the hand 3 is most advanced in the second direction Z. FIG. 9 is a perspective view of the wrist 4 in the state where the hand 3 is most advanced in the second direction Z. In FIG. 9, the hand 3 is omitted. The advanced state of the wrist 4 is a state where the wrist 4 has moved in the second direction Z from the basic state.

In the Chebyshev linkage 60, in a certain section (hereinafter referred to as a "specific section") in one turn of the driving link 61, a distal end portion of the intermediate link 63, that is, an end portion of the intermediate link 63 to which the driving link 61 is coupled, substantially linearly moves. The moving direction of the distal end portion of the intermediate link 63 substantially coincides with the second direction Z. Specifically, the distal end portion of the intermediate link 63 linearly moves between a first position and a second position in the second direction Z. The second position is located farther from the driving axis D of the driving link 61 than the first position in the second direction Z. That is, movement of the intermediate link 63 toward the second position in the second direction Z is movement in a direction away from the driving axis D of the driving link 61, and is also expressed as "advancement." Movement of the intermediate link 63 toward the first position in the second direction Z is movement in a direction toward the driving axis D of the driving link 61, and is also expressed as "retraction." In the basic state of the wrist 4, the distal end portion of the intermediate link 63 is located at the first position. Positions of the second base 42, the hand 3, and other components when the distal end portion of the intermediate link 63 is located at the first position will also be referred to as the "first position." Positions of the second base 42, the hand 3, and other components when the distal end portion of the intermediate link 63 is located at the second position will also be referred to as the "second position." For example, the first position of the hand 3 is a position of the hand 3 when the distal end portion of the intermediate link 63 is located at the first position.

While the driving link 61 is in the state of FIG. 4, the distal end portion of the intermediate link 63 is located at the first position. In FIGS. 3 and 5, the distal end portion of the intermediate link 63 is also located at the first position. When the driving link 61 rotates clockwise (in the direction of the arrow in FIG. 4) from the state of FIG. 4, the distal end portion of the intermediate link 63 linearly moves toward the second position (downward in the drawing) in the second direction Z, as illustrated in FIG. 7. When the driving link 61 reaches the state of FIG. 8, the distal end portion of the intermediate link 63 reaches the second position in the second direction Z. When the driving link 61 rotates counterclockwise from the state of FIG. 8, the distal end portion of the intermediate link 63 linearly moves toward the first position in the second direction Z. When the driving link 61 reaches the state of FIG. 4, the distal end portion of the intermediate link 63 reaches the first position in the second direction Z.

In a case where the driving link 61 further rotates clockwise from the state of FIG. 8 to the state of FIG. 4, the distal end portion of the intermediate link 63 also returns to the first position. However, the trajectory of the distal end portion of the intermediate link 63 in this case is not linear but is curved.

In the manner described above, in the specific section in rotation of the driving link 61, the distal end portion of the intermediate link 63 linearly moves. The second base 42 is coupled to the distal end portion of the intermediate link 63, and the hand 3 is attached to the second base 42. That is, the hand 3 linearly moves. The hand 3 can be advanced or retracted substantially in the second direction Z by rotating the driving link 61 in the specific section. Depending on the direction of the rotation of the driving link 61 in this specific section, it is determined whether the distal end portion of the intermediate link 63, that is, the hand 3, moves toward the first position or the second position in the second direction Z.

### =Pitch Transfer =

The second base 42 is coupled to the intermediate link 63 to be rotatable about the pitch axis P. Specifically, as illustrated in FIG. 3, the intermediate link 63 of the first linkage 6A and the intermediate link 63 of the second linkage 6B face each other in the direction of the driving axis D. The second base 42 is coupled to the two intermediate links 63 to be rotatable about the pitch axis P. The pitch axis P is parallel to the driving axis D. That is, the pitch axis P is orthogonal to a plane in which the links of the linkage 6 move. The pitch transfer 8 is coupled to the second base 42. The second base 42 includes the rotation body 46 that is rotatable about the yaw axis Y. The yaw axis Y extends in a direction intersecting the direction of the pitch axis P.

As illustrated in FIG. 4, the pitch transfer 8 includes four-bar linkages 80. The four-bar linkages 80 are parallel linkages. The intermediate link 63 of the Chebyshev linkage 60 functions as a link included in the four-bar linkage 80. In this example, as illustrated in FIG. 5, the pitch transfer 8 includes the four-bar linkage 80 corresponding to the first linkage 6A and the four-bar linkage 80 corresponding to the second linkage 6B. The four-bar linkage 80 corresponding to the first linkage 6A and the four-bar linkage 80 corresponding to the second linkage 6B have the same configuration.

Specifically, as illustrated in FIG. 4, each of the four-bar linkages 80 includes a first four-bar linkage 81 coupled to the second base 42, and a second four-bar linkage 82 that is coupled to the first four-bar linkage 81 and driven by the second actuator 52. The intermediate link 63 of the Chebyshev linkage 60 functions as a link included in the first four-bar linkage 81, and the driven link 62 of the Chebyshev linkage 60 functions as a link included in the second four-bar linkage 82.

Specifically, the first four-bar linkage 81 includes a first fixing link 83, a first driving link 84 coupled to the first fixing link 83 to be rotatable about an axis parallel to the pitch axis P, a first driven link 85 coupled to the first fixing link 83 to be rotatable about an axis parallel to the pitch axis P, and a first intermediate link 86 coupled to each of the first driving link 84 and the first driven link 85 to be rotatable about an axis parallel to the pitch axis P. The first fixing link 83 is the intermediate link 63 of the Chebyshev linkage 60. The first driven link 85 is fixed to the second base 42. More specifically, the first driven link 85 is a part of the base body 45 of the second base 42. The first intermediate link 86 is located at a position facing the first fixing link 83. The first four-bar linkage 81 is a parallel linkage. The four links coupling the first fixing link 83, the first driving link 84, the first driven link 85, and the first intermediate link 86 are located substantially at vertexes of a parallelogram.

The second four-bar linkage 82 includes a second fixing link 87, a second driving link 88 coupled to the second fixing link 87 to be rotatable about an axis parallel to the pitch axis P, a second driven link 89 coupled to the second fixing link 87 to be rotatable about an axis parallel to the pitch axis P, and a second intermediate link 810 coupled to each of the second driving link 88 and the second driven link 89 to be rotatable about an axis parallel to the pitch axis P. The second fixing link 87 is the driven link 62 of the Chebyshev linkage 60. The second intermediate link 810 is located at a position facing the second fixing link. The second four-bar linkage 82 is a parallel linkage. The four links coupling the second fixing link 87, the second driving link 88, the second driven link 89, and the second intermediate link 810 are located substantially at vertexes of a parallelogram.

In FIG. 4, straight line segments defining the link lengths of the links in the first four-bar linkage 81 and the second four-bar linkage 82 are indicated by broken lines. The same holds for FIGS. 7, 8, 10, 11, and 14.

The second driven link 89 is coupled to the first driving link 84. The second driven link 89 is coupled to the first driving link 84 via a connecting link 811. When the second driven link 89 moves, the first driving link 84 moves in conjunction with the second driven link 89. More specifically, the first driving link 84 and the second driven link 89 are also coupled to a coupling portion between the driven link 62 and the intermediate link 63. The first driving link 84, the second driven link 89, and the connecting link 811 are integrally shaped. The positional relationship among the first driving link 84, the second driven link 89, and the connecting link 811 is fixed. In this example, each of the first driving link 84, the second driven link 89, and the connecting link 811 is a substantially triangular plate. When the second driven link 89 moves, the first driving link 84 and the connecting link 811 move in conjunction with the second driven link 89.

The second driving link 88 is rotationally driven by the second actuator 52. As illustrated in FIG. 6, a shaft 812 that is rotationally driven by the second actuator 52 is coupled to the second driving link 88. Specifically, the shaft 812 is supported by the first base 41 to be rotatable about the axis of the shaft 812. A rotation axis E, that is, an axis, of the shaft 812 is parallel to the driving axis D. The second driving link 88 is non-rotatably coupled to the shaft 812. That is, the second driving link 88 is coupled to the first base 41 via the shaft 812 to be rotatable about the rotation axis E. The second driving link 88 and the shaft 812 are coupled to the rotation body 44 of the first base 41. The driven link 62 is coupled to the shaft 812 to be rotatable about the rotation axis E. That is, the driven link 62 is rotatably coupled to the first base 41, and also rotatably coupled to the second driving link 88, via the shaft 812.

When the shaft 812 is rotationally driven, the second driving link 88 rotates integrally with the shaft 812. On the other hand, the driven link 62 does not rotate integrally with the shaft 812. When the second driving link 88 rotates, the second intermediate link 810 and the second driven link 89 move in conjunction with rotation of the second driving link 88. When the second driven link 89 moves, the first driving link 84 of the first four-bar linkage 81 rotates in conjunction with the second driven link 89. When the first driving link 84 rotates, the first intermediate link 86 and the first driven link 85 move in conjunction with rotation of the first driving link 84. Since the first driven link 85 is integrated with the second base 42, the second base 42 rotates about the pitch axis P. Even when the second driving link 88 rotates, the first fixing link 83 and the second fixing link 87, that is, the Chebyshev linkage 60, are not affected by the rotation.

In this manner, when the second driving link 88 is rotationally driven, the second base 42 and the hand 3 rotate about the pitch axis P without affecting the Chebyshev linkage 60.

### =Second Actuator=

The second actuator 52 is an electric motor, specifically, a servo motor. The second actuator 52 includes an encoder. As illustrated in FIG. 5, the second actuator 52 is attached to the first base 41, more specifically, the rotation body 44. The second actuator 52 is located between the first linkage 6A and the second linkage 6B.

Rotation of the second actuator 52 is transferred to the four-bar linkage 80 via a worm gear. Specifically, as illustrated in FIG. 6, a worm 74 is attached to the output shaft of the second actuator 52. The worm 74 rotates integrally with the output shaft. A worm wheel 75 is coupled to the second driving link 88 of the four-bar linkage 80. The worm wheel 75 is non-rotatably attached to the shaft 812. That is, the worm wheel 75 is coupled to the second driving link 88 via the shaft 812. The worm 74 and the worm wheel 75 mesh with each other.

When the second actuator 52 moves, the worm 74 rotates. The worm wheel 75 rotates in conjunction with the worm 74, and the shaft 812 rotates integrally with the worm wheel 75. Since the second driving link 88 is non-rotatably coupled to the shaft 812, the second driving link 88 rotates about the rotation axis E integrally with the shaft 812. In this manner, the four-bar linkage 80 is driven by the second actuator 52. Since the second driving link 88 of the four-bar linkage 80 corresponding to the first linkage 6A and the second driving link 88 of the four-bar linkage 80 corresponding to the second linkage 6B are coupled to the shaft 812, the second driving links 88 of the two four-bar linkages 80 operate integrally.

### =Pitch Motion=

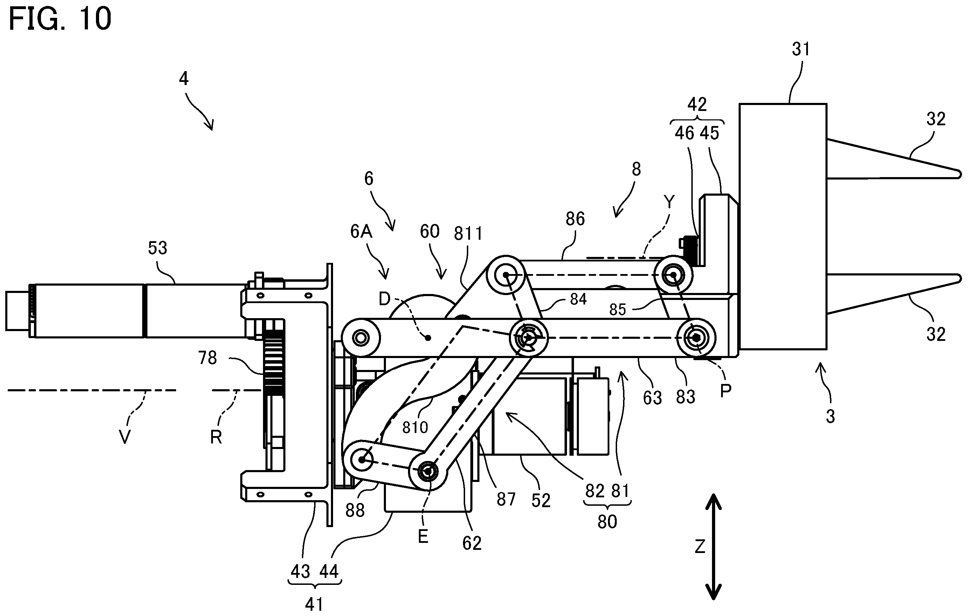

Next, a pitch motion of the wrist 4 will be described. FIG. 10 is a side view of the wrist 4 after a pitch motion. The wrist 4 in FIG. 10 rotates the hand 3 about the pitch axis P from the basic state of FIG. 4. In this example, a pitch angle when the fingers 32 extend in the second direction Z, that is, when the yaw axis Y is directed in the second direction Z, is defined as 0 degrees. A direction in which the tips of the fingers 32 rotate in the direction opposite to the first base 41 from the state where the pitch angle is 0 degrees is positive. The hand 3 in FIG. 10 is rotated approximately 90 degrees about the pitch axis P.

In a case where the Chebyshev linkage 60 is stationary, the driven link 62 (i.e., the second fixing link 87) and the intermediate link 63 (i.e., the first fixing link 83) do not move. When the second driving link 88 is rotationally driven by the second actuator 52, the second intermediate link 810 and the second driven link 89 move in conjunction with the second driving link 88. Since the relative positional relationship between the first driving link 84 and the second driven link 89 is unchangeable, the first driving link 84 rotates in conjunction with the movement of the second driven link 89. When the first driving link 84 rotates, the first intermediate link 86 and the first driven link 85 move in conjunction with the first driving link 84. The first driven link 85 rotates about the pitch axis P. The first driven link 85 is integrated with the second base 42, and the hand 3 is attached to the second base 42. That is, the hand 3 rotates about the pitch axis P. The pitch angle that is an angle of the second base 42 about the pitch axis P is adjusted based on the rotation angle of the second driving link 88.

When the Chebyshev linkage 60 moves, the driven link 62 and the intermediate link 63 move, and accordingly, the four-bar linkage 80 also moves. However, in a case where the second driving link 88 is not rotationally driven, as illustrated in FIGS. 4, 7, and 8, the angle of the first driven link 85 does not change, and the pitch angle of the hand 3 is maintained. That is, the pitch transfer 8 maintains the pitch angle of the second base 42 about the pitch axis P while the second base 42 moves in the second direction Z via the Chebyshev linkage 60. The posture of the first driving link 84 that is a link at a position facing the first driven link 85 as a link integrated with the second base 42 is maintained and unchanged during movement of the Chebyshev linkage 60.

Specifically, since the second four-bar linkage 82 is a parallel linkage, the angle of the second driving link 88 and the second driven link 89 facing each other does not change in FIGS. 4, 7, and 8. That is, if the second driving link 88 does not rotate, the angle of the second driven link 89 does not change even when the second driven link 89 moves. In addition, since the second driven link 89 and the first driving link 84 are integrally coupled to each other, the relative positional relationship between the second driven link 89 and the first driving link 84 is unchanged. That is, if the angle of the second driven link 89 does not change, the angle of the first driving link 84 does not change even when the first driving link 84 moves. Furthermore, since the first four-bar linkage 81 is a parallel linkage, the angle of the first driving link 84 and the first driven link 85 facing each other does not change. That is, if the angle of the first driving link 84 does not change, the angle of the first driven link 85 does not change even when the first driven link 85 moves. That is, even when the second driven link 89, the first driving link 84, and the first driven link 85 move in conjunction with movement of the Chebyshev linkage 60, the angles of the second driven link 89, the first driving link 84, and the first driven link 85 do not change unless the second driving link 88 rotates.

In other words, the pitch angle of the hand 3 depends on the rotation angle of the second driving link 88, and is not affected by the state of the Chebyshev linkage 60. Whether the Chebyshev linkage 60 is stopped or in operation, when the second driving link 88 is rotationally driven, the pitch angle of the hand 3 changes in accordance with the rotation angle of the second driving link 88. Whether the Chebyshev linkage 60 is stopped or in operation, when the second driving link 88 is not rotating, the pitch angle of the hand 3 is maintained.

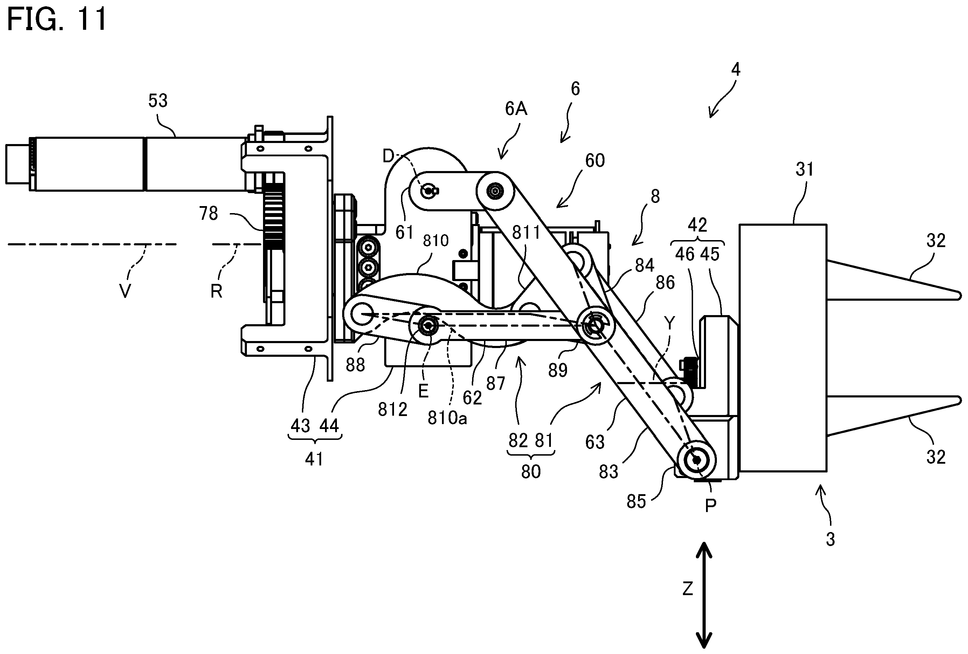

In the pitch transfer 8, the shaft 812 is coupled to the second driving link 88. Thus, as illustrated in FIG. 11, the second intermediate link 810 approaches the shaft 812 in some situations of the pitch transfer 8. FIG. 11 is a side view of the wrist 4 in a case where the hand 3 is most advanced in the second direction Z and the pitch angle is 90 degrees. The second intermediate link 810 is curved to avoid interference with the shaft 812 when the second intermediate link 810 approaches the shaft 812 in conjunction with the second driving link 88. That is, when the angle between the second driving link 88 and the second fixing link 87 is large, the second intermediate link 810 approaches the shaft 812. The second intermediate link 810 includes a curved portion 810a that is recessed toward the side opposite to the shaft 812 in a portion that approaches the shaft 812. The curved portion 810a of the second intermediate link 810 causes the second intermediate link 810 to be less likely to interfere with the shaft 812. As a result, the movement range of the second intermediate link 810 is enlarged, and consequently, the range of the pitch motion of the wrist 4 is enlarged.

### =Third Actuator=

The third actuator 53 is an electric motor, specifically, a servo motor. The third actuator 53 includes an encoder. As illustrated in FIG. 5, the third actuator 53 is attached to the first base 41, more specifically, the base body 43.

Rotation of the third actuator 53 is transferred to the rotation body 44 via a roll transfer 76. The roll transfer 76 includes a gear train. Specifically, the roll transfer 76 includes a first gear 77 attached to the output shaft of the third actuator 53 and a second gear 78 attached to the rotation body 44. The first gear 77 rotates integrally with the output shaft. The second gear 78 is non-rotatably attached to the rotation body 44. The second gear 78 meshes with the first gear 77.

### =Roll Motion=

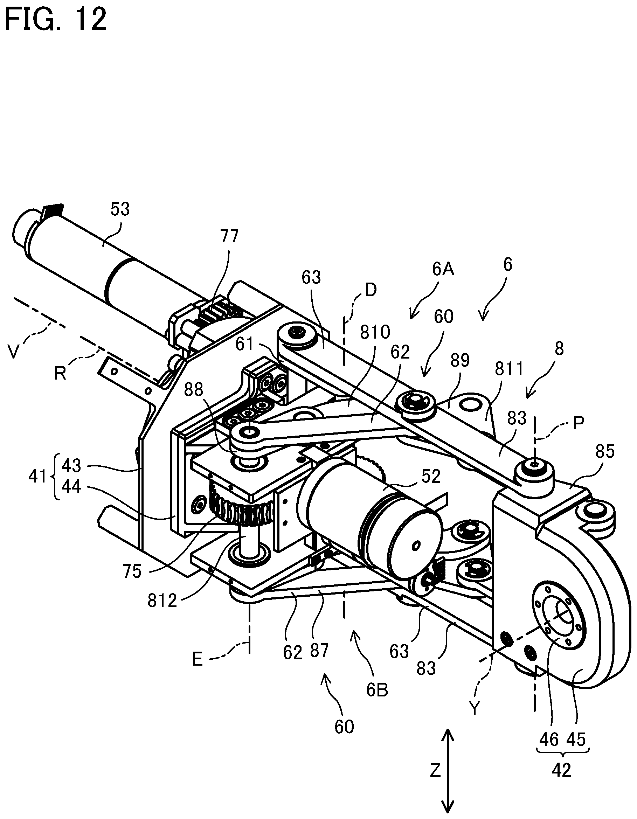

Next, a roll motion of the wrist 4 will be described. FIG. 12 is a perspective view of the wrist 4 after a roll motion. The wrist 4 in FIG. 12 rotates the linkage 6 about the roll axis R from the basic state of FIG. 4. In this example, a roll angle when the second direction Z extends in the vertical direction and the fingers 32 extend downward from the hand body 31 is defined as 0 degrees. A direction that rotates clockwise with respect to the first base 41 when viewed directly facing the roll axis R is positive. The linkage 6 in FIG. 12 is rotated approximately 90 degrees about the roll axis R.

When the third actuator 53 moves, the first gear 77 rotates. In conjunction with the first gear 77, the second gear 78 rotates, and the rotation body 44 rotates about the roll axis R integrally with the second gear 78. The linkage 6 is coupled to the rotation body 44. The second base 42 is coupled to the linkage 6. In this manner, the third actuator 53 rotates the second base 42 about the roll axis R. Since the hand 3 is coupled to the second base 42, the hand 3 rotates about the roll axis R. The pitch transfer 8 also rotates about the roll axis R integrally with the rotation body 44.

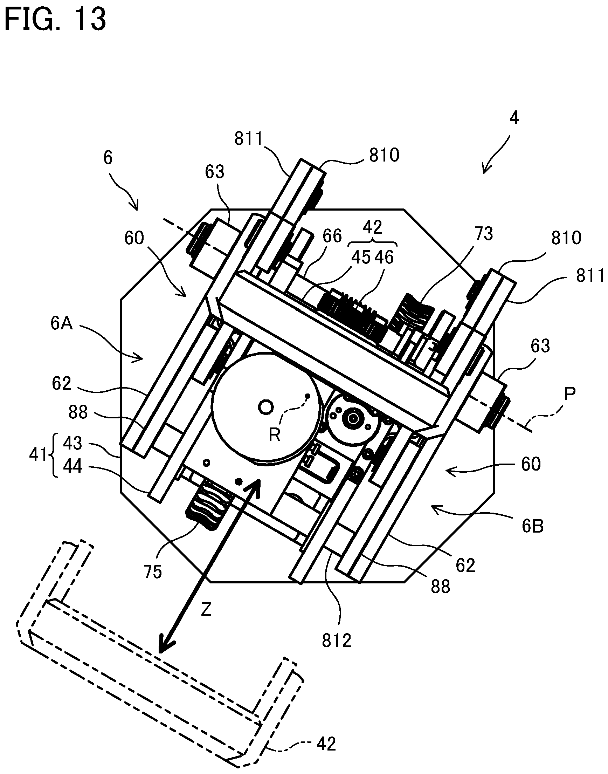

FIG. 13 is a front view of the wrist 4 in a state where the linkage 6 is rotated about the roll axis R. Since the linkage 6 rotates about the roll axis R, the second direction Z and the pitch axis P also rotate about the roll axis R. That is, by rotating the linkage 6 about the roll axis R, it is possible to change orientation of the direction in which the hand 3 moves linearly, as well as to change orientation of the pitch axis P of a pitch motion of the wrist 4.

### =Fourth Actuator=

The fourth actuator 54 is an electric motor, specifically, a servo motor. The fourth actuator 54 includes an encoder. As illustrated in FIG. 3, the fourth actuator 54 is attached to the second base 42, more specifically, the base body 45. The fourth actuator 54 is located between the first linkage 6A and the second linkage 6B.

### =Yaw Transfer=

Rotation of the fourth actuator 54 is transferred to the rotation body 46 via the yaw transfer 79. The yaw transfer 79 includes a transmission belt and a worm gear. Specifically, the shaft 47 is supported by the base body 45 to be rotatable about the axis of the shaft 47. The yaw transfer 79 includes a pulley attached to an output shaft of the fourth actuator 54, a pulley attached to shaft 47, a belt wound around the two pulleys, a worm 710 attached to the shaft 47, and a worm wheel 711 attached to the rotation body 46. The worm 710 is non-rotatably attached to the shaft 47 and rotates integrally with the shaft 47. The worm wheel 711 is non-rotatably attached to the rotation body 46 and meshes with the worm 710. The yaw axis Y passes through the center of the worm wheel 711.

When the fourth actuator 54 moves, the shaft 47 rotates via the two pulleys and the belt. The worm 710 rotates together with the shaft 47, and the worm wheel 711 rotates in conjunction with the worm 710. The rotation body 46 rotates integrally with the worm wheel 711.

### =Yaw Motion=

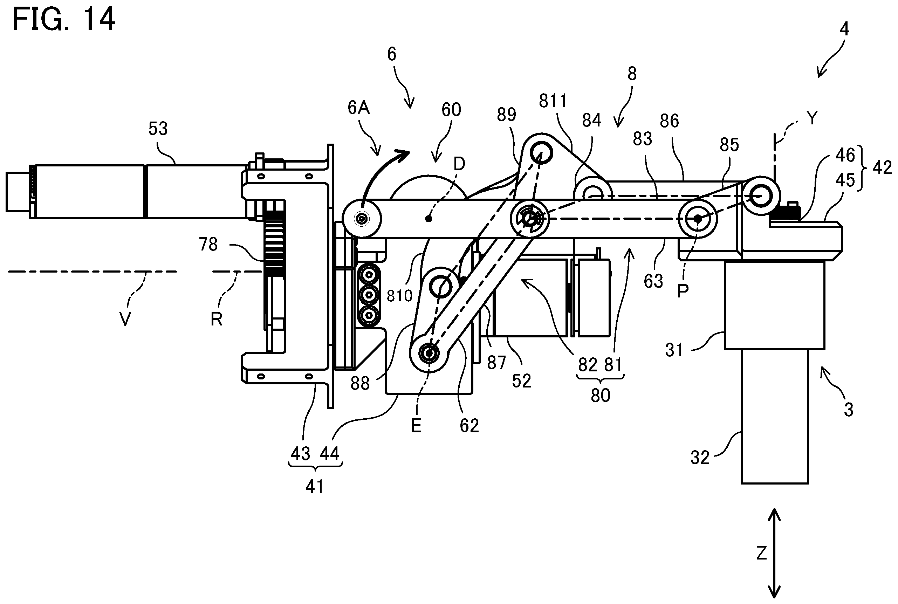

Next, a yaw motion of the wrist 4 will be described. FIG. 14 is a side view of the wrist 4 after a yaw motion. The wrist 4 in FIG. 14 rotates the hand 3 about the yaw axis Y from the basic state of FIG. 4. In this example, a yaw angle when the opening/closing direction of the fingers 32 is parallel to the roll axis R is defined as 0 degrees. The hand 3 in FIG. 14 is rotated approximately 90 degrees about the yaw axis Y.

When the rotation body 46 is rotated about the yaw axis Y by the fourth actuator 54, the hand 3 rotates about the yaw axis Y integrally with the rotation body 46. When the wrist 4 performs a yaw motion, orientation of the opening/closing direction of the fingers 32 is changed. In FIG. 4, the opening/closing direction of the fingers 32 is parallel to the roll axis R. On the other hand, in FIG. 14, the opening/closing direction of the fingers 32 is orthogonal to the roll axis R.

Since the hand 3 is supported by the second base 42 to be rotatable about the yaw axis Y, in a case where the second base 42 moves by a roll motion and/or a pitch motion, orientation of the yaw axis Y also changes in accordance with the second base 42.

### =Controller=

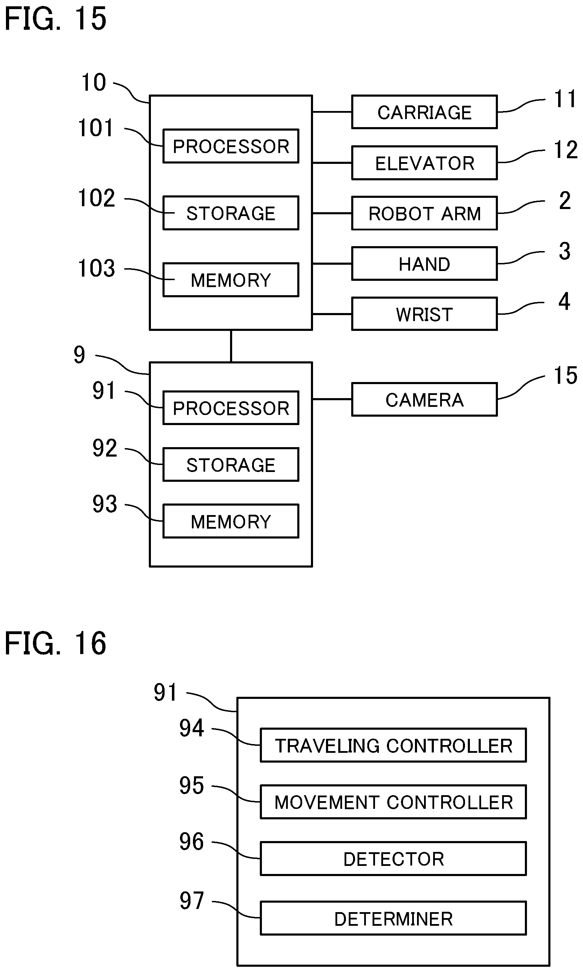

FIG. 15 illustrates a schematic hardware configuration of the controller 9. The controller 9 controls the robot 1 to cause the hand 3 to execute various jobs. The robot system 100 further includes a robot controller 10. The controller 9 transmits and receives signals, information, and other data to/from the robot controller 10. The controller 9 controls the robot 1 via the robot controller 10. The controller 9 outputs an instruction to the robot controller 10. The controller 9 transmits and receives signals, information, and other data to/from the camera 15. The robot controller 10 controls various actuators of the robot 1 in accordance with an instruction from the controller 9.

The robot controller 10 includes a processor 101, a storage 102, and a memory 103.

The processor 101 controls the entire robot controller 10. The processor 101 performs various computation processes. For example, the processor 101 is a processor such as a central processing unit (CPU). The processor 101 may be a micro controller unit (MCU), a micro processor unit (MPU), a field programmable gate array (FPGA), a programmable logic controller (PLC), or system LSI, for example.

The storage 102 stores programs and various types of data to be executed by the processor 101. The storage 102 may be, for example, a nonvolatile memory, a hard disc drive (HDD), or a solid state drive (SSD). The memory 103 temporarily stores data or other information. For example, the memory 103 is a volatile memory.

The processor 101 controls the mobile base 11, the lifter 12, the robot arm 2, the hand 3, and the wrist 4 based on instructions from the controller 9. Specifically, the processor 101 controls actuators such as the mobile base 11. At this time, the robot controller 10 controls actuators.

The controller 9 includes a processor 91, a storage 92, and a memory 93.

The processor 91 controls the entire controller 9. The processor 91 performs various computation processes. For example, the processor 91 is a processor such as a central processing unit (CPU). The processor 91 may be a micro controller unit (MCU), a micro processor unit (MPU), a field programmable gate array (FPGA), a programmable logic controller (PLC), or system LSI, for example.

The storage 92 stores various programs and various types of data to be executed by the processor 91. The storage 92 may be, for example, a nonvolatile memory, a hard disc drive (HDD), or a solid state drive (SSD). Various programs enable the controller 9 to perform various functions. The memory 93 temporarily stores data or other information. For example, the memory 93 is a volatile memory. The memory 93 stores images from the camera 15.

FIG. 16 is a block diagram illustrating a configuration of a control system of the controller 9. The processor 91 reads programs from the storage 92 and develops the programs to the memory 93 to thereby perform various functions. Specifically, the processor 91 functions as a traveling controller 94, a movement controller 95, a detector 96, and a determiner 97.

The traveling controller 94 controls the mobile base 11. The traveling controller 94 executes traveling control of the mobile base 11 to move the robot 1.

The movement controller 95 moves the lifter 12, the robot arm 2, the hand 3, and the wrist 4. The movement controller 95 controls actuators of the lifter 12, the robot arm 2, the hand 3, and the wrist 4. For example, the movement controller 95 lifts and lowers the lifter 12 and turns the lifter 12. The movement controller 95 extends and contracts the robot arm 2. The movement controller 95 opens and closes the fingers 32 of the hand 3. The movement controller 95 causes the wrist 4 to execute various motions.

The detector 96 causes the camera 15 to acquire an image in the first container C1 and detects workpieces W from the acquired image. The detector 96 causes the camera 15 to acquire an image after the hand 3 has been placed above the first container C1 by the robot arm 2. The camera 15 takes an image of the inside of the first container C1 from above. The detector 96 stores the image from the camera 15 in the memory 93. The detector 96 detects workpieces W from the image through image recognition. The image may include workpieces. The detector 96 detects the position, the size, and other features of the workpieces W.

The determiner 97 determines interference between the hand 3 and other objects during movement of the robot 1. In a case where the hand 3 is holding a workpiece W, the determiner 97 determines interference between the workpiece W held by the hand 3 and other objects. In this example, the determiner 97 determines whether the hand 3 or the workpiece W interferes with the first container C1 during movement of the hand 3. Specifically, the determiner 97 estimates interference between the hand 3 or the workpiece W and the first container C1 based on the position of the hand 3, the posture of the hand 3, the size of the workpiece W, and others.

Next, a basic operation of transfer work by the robot 1 will be described. The transfer work includes picking work and placing work. The controller 9, specifically the traveling controller 94, controls the mobile base 11 to move the robot 1 to a position facing the shelf S, as illustrated in FIG. 1. The controller 9, specifically the movement controller 95, controls the lifter 12 to move the robot arm 2 such that the hand 3 is located at a predetermined entry start position. The entry start position is a position where the hand 3 faces the work space H between the target first container C1 and the shelf board s1 located above the first container C1.

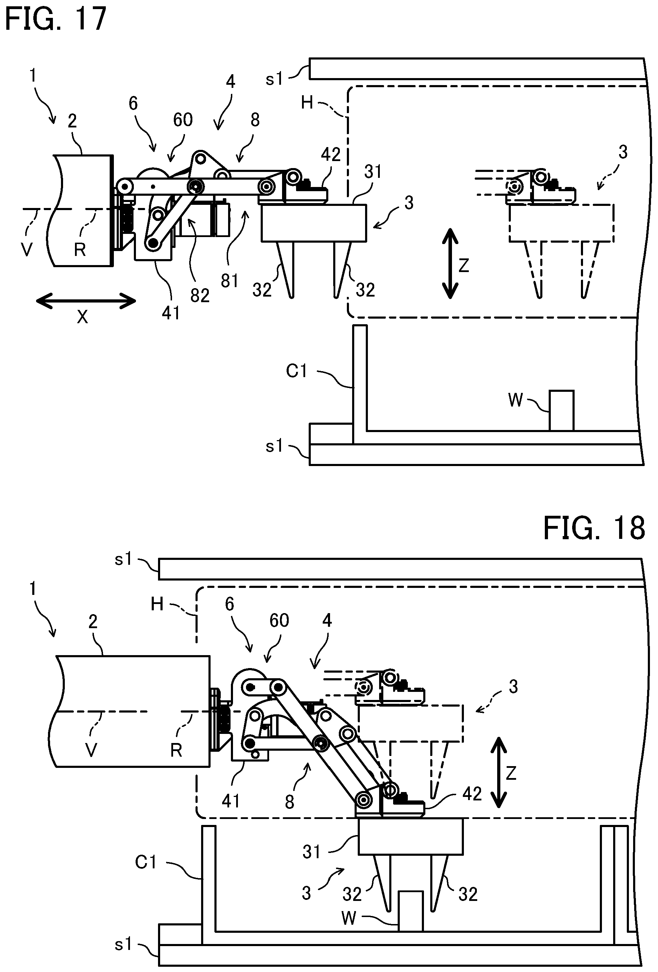

From this state, the controller 9, specifically the movement controller 95, causes the robot 1 to execute an advancing motion and a lifting/lowering motion. FIG. 17 is a side view of the hand 3 and the wrist 4 in an advancing motion. FIG. 18 is a side view of the hand 3 and the wrist 4 in a lifting/lowering motion. In the advancing motion, as illustrated in FIG. 17, the robot 1 moves the hand 3 and the wrist 4 in the first direction X by extending the robot arm 2 in the first direction X. The hand 3 and the wrist 4 enter the work space H from the first direction X. A portion of the robot arm 2 also enters the work space H from the first direction X. At this time, the wrist 4 locates the hand 3 at a first position in the second direction Z. Accordingly, the hand 3 and the wrist 4 become compact in the second direction Z, and thus, the hand 3 and the wrist 4 easily enter the work space H. In this example, the fingers 32 of the hand 3 are oriented in the second direction Z. The orientation of the fingers 32 is the direction in which the fingers 32 extend, and in this example, is the direction of the yaw axis Y.

The controller 9, specifically the movement controller 95, causes the robot 1 to perform a lifting/lowering motion after the advancing motion. In the lifting/lowering motion, as illustrated in FIG. 18, the robot 1 moves the hand 3 away from the robot arm 2 in the second direction Z by the wrist 4, that is, advances the hand 3. The hand 3 enters the first container C1. Specifically, the controller 9 operates the first actuator 51 to move the Chebyshev linkage 60. The wrist 4 linearly moves the hand 3 in the second direction Z. Accordingly, the hand 3 can reach the target workpiece W.

In this example, the robot 1 does not move the robot arm 2 in the lifting/lowering motion. However, before or during the lifting/lowering motion, the position of the robot arm 2 may be adjusted by extension and contraction of the robot arm 2, turning of the robot arm 2 by the lifter 12, or movement of the mobile base 11.

The controller 9, specifically the detector 96, may cause the camera 15 to acquire an image in the first container C1 between the advancing motion and the lifting/lowering motion. The detector 96 detects the position of the workpiece W from the acquired image. The movement controller 95 may move the robot arm 2 based on the detected position of the workpiece W to adjust the position of the hand 3. The movement controller 95 may adjust the position of the hand 3 by moving the mobile base 11 or the lifter 12 based on the detected position of the workpiece W.

After the lifting/lowering motion, the controller 9, specifically the movement controller 95, causes the robot 1 to execute a holding motion and a retracting motion. In the holding motion, the robot 1 causes the hand 3 to hold the workpiece W. The hand 3 grips the workpiece W by closing the fingers 32.

The controller 9, specifically the movement controller 95, causes the robot 1 to perform a lifting/lowering motion after the holding motion and before the retracting motion. In the lifting/lowering motion, the robot 1 moves the hand 3 to a side toward the robot arm 2 in the second direction Z by the wrist 4, that is, retracts the hand 3. The hand 3 exits from the first container C1. Specifically, the controller 9 operates the first actuator 51 to move the Chebyshev linkage 60. The wrist 4 linearly moves the hand 3 to the first position in the second direction Z. In this example, the robot 1 does not move the robot arm 2 during the lifting/lowering motion.

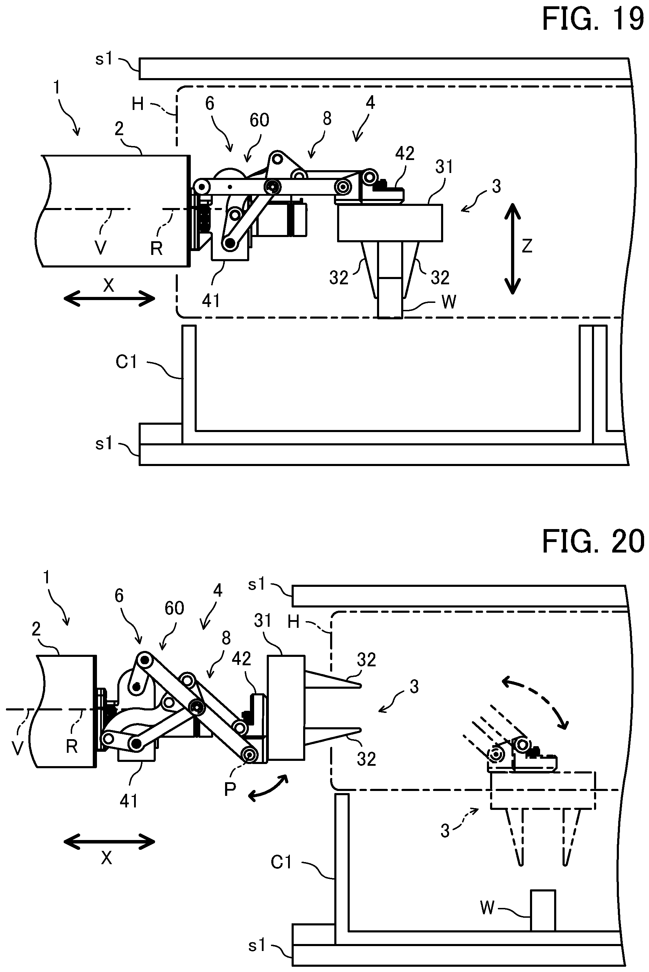

FIG. 19 is a side view of the hand 3 and the wrist 4 before a retracting motion. The controller 9, specifically the movement controller 95, causes the robot 1 to perform a retracting motion after the lifting/lowering motion. In the retreating motion, the robot 1 moves the hand 3 and the wrist 4 in the first direction X by contracting the robot arm 2 in the first direction X. The hand 3 and the wrist 4 exit from the work space H in the first direction X. The portion of the robot arm 2 also exits from the work space H in the first direction X. The wrist 4 locates the hand 3 at the first position in the second direction Z. Accordingly, the hand 3 and the wrist 4 become compact in the second direction Z, and thus, the hand 3 and the wrist 4 easily exit from the work space H. In this example, the fingers 32 of the hand 3 are oriented in the second direction Z.

In the placing work, the controller 9 moves the hand 3 to a position above the second container C2 by turning and lifting/lowering the lifter 12. The controller 9 adjusts the position of the hand 3 relative to the second container C2 by extending the robot arm 2 when necessary. The controller 9 moves the hand 3 into the second container C2 by the wrist 4. The controller 9 places the workpiece W in the second container C2 by releasing gripping of the workpiece W with the fingers 32 of the hand 3.

In this manner, the robot 1 moves the hand 3 to a complicated position by combining the advancing motion of the robot arm 2 and the lifting/lowering motion of the wrist 4. The advancing motion of the robot arm 2 causes the hand 3 to enter a narrow space in the first direction X. After the hand 3 has entered the narrow space in the first direction X, movement of the robot arm 2 is limited. In such a situation, the wrist 4 moves the hand 3 in the second direction Z. Accordingly, the hand 3 can be moved in the second direction Z different from the first direction X in a narrow space, without moving the robot arm 2. Consequently, the hand 3 can reach a complicated position in a narrow space.

In addition, the wrist 4 more flexibly moves the hand 3 through a pitch motion, a roll motion, and a yaw motion. For example, in the advancing motion, the controller 9, specifically the movement controller 95, changes the rotation posture of the hand 3 about the pitch axis P or the roll axis R to a posture different from that in a lifting/lowering motion, and extends the robot arm 2 in the first direction X. At this time, in the advancing motion, the controller 9 may change the rotation posture of the hand 3 about the pitch axis P or the roll axis R in accordance with the size of a space through which the hand 3 and the wrist 4 pass in the advancing motion. In this example, the "space through which the hand 3 and the wrist 4 pass in the advancing motion" is the work space H. In this example, the posture of the hand 3 in the lifting/lowering motion is a position in which the fingers 32 are directed to a side away from the robot arm 2 in the second direction Z with respect to the pitch axis P and the second direction Z is oriented in the vertical direction with respect to the roll axis R.

FIG. 20 is a side view of the hand 3 and the wrist 4 in a state where the posture of the hand 3 about the pitch axis P is changed before the advancing motion. In a case where the space through which the hand 3 and the wrist 4 pass in the advancing motion is narrow, highly accurate position control of the hand 3 and other components may be necessary when the robot arm 2 advances the hand 3 and other components. In some cases, the hand 3 or the wrist 4 may interfere with other objects, for example, the shelf s1 or the first container C1. The controller 9 adjusts the rotation posture of the hand 3 about the pitch axis P or the roll axis R based on the size of the work space H, specifically the size of the work space H in a cross section orthogonal to the first direction X. More specifically, the controller 9 adjusts the rotation posture of the hand 3 based on the size of the work space H in a direction in which the work space H is smallest in a cross section of the work space H orthogonal to the first direction X. In this example, since the size of the work space H is smallest in the vertical direction, the controller 9 adjusts the rotation posture of the hand 3 based on the size of the work space H in the vertical direction.

As illustrated in FIG. 18, the rotation posture of the hand 3 about the pitch axis P in the lifting/lowering motion is naturally a posture in which the fingers 32 are oriented downward in the vertical direction. In this posture, the distal ends of the fingers 32 project downward from the robot arm 2 and the wrist 4 in the vertical direction. Thus, the overall size of the hand 3 and other components in the vertical direction is relatively large. In the example illustrated in FIG. 20, the controller 9 adjusts the rotation posture of the hand 3 about the pitch axis P. Specifically, the controller 9 rotates the hand 3 about the pitch axis P via the wrist 4 so that the fingers 32 are oriented in the horizontal direction, that is, in the first direction X. As a result, the size of the hand 3 in the vertical direction is reduced. In a case where the work area H has a margin in size, the rotation posture of the hand 3 may be such that the fingers 32 are oriented obliquely downward.

In the example illustrated in FIG. 20, the controller 9 also adjusts the position of the hand 3 in the vertical direction. The pitch motion of the wrist 4 may cause the hand 3 or the wrist 4 to project in the vertical direction with respect to the robot arm 2 (see FIG. 10). When the wrist 4 changes the position of the hand 3 in the second direction Z to a side away from the robot arm 2, the overall size of the robot arm 2, the hand 3, and the wrist 4 in the vertical direction can be reduced.

In a case where the size of the work space H is known, the controller 9 adjusts the rotation posture of the hand 3 about the pitch axis P based on the known size of the work space H. The controller 9 determines the rotation posture of the hand 3 about the pitch axis P based on the size of the work space H, and further, determines the position of the hand 3 in the second direction Z.

Alternatively, the controller 9 may acquire the size of the work space H using a camera or the like. For example, in a case where the robot 1 includes the camera 15 mounted on the hand 3, the controller 9 may cause the camera 15 to acquire an image of the work space H from a position facing the shelf S, and obtains the size of the work space H through image recognition from the acquired image.

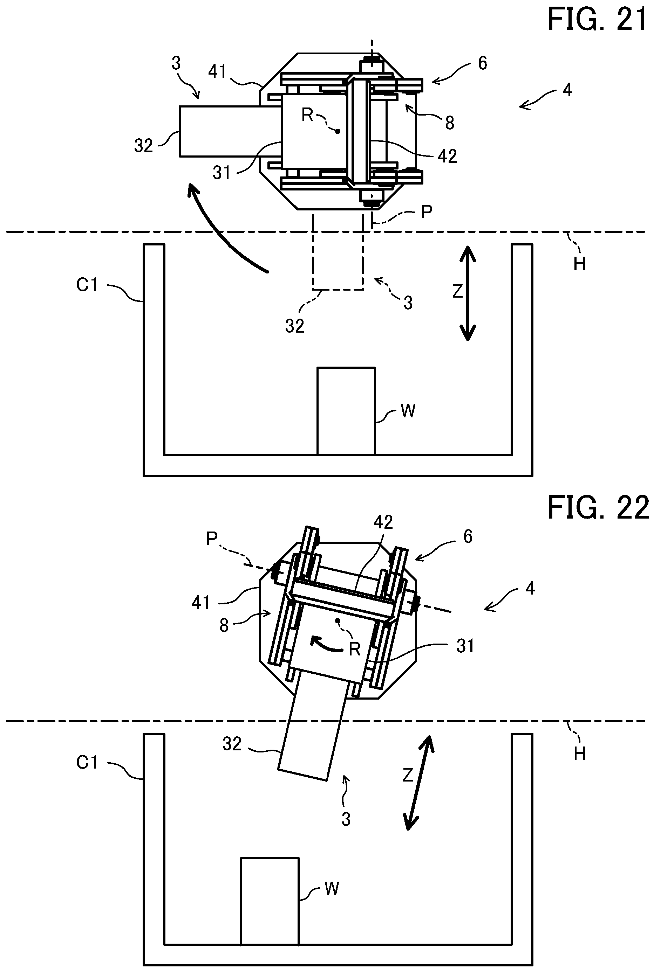

The controller 9 may adjust the rotation posture of the hand 3 about the roll axis R. FIG. 21 is a front view of the hand 3 and the wrist 4 in a case where the rotation posture of the hand 3 in the advancing motion is changed by a roll motion. The rotation posture of the hand 3 about the roll axis R in the lifting/lowering motion is naturally a posture in which the second direction Z is oriented in the vertical direction (see the chain double-dashed line). In this posture, the distal ends of the fingers 32 project downward from the robot arm 2 and the wrist 4 in the second direction Z. Thus, the overall size of the hand 3 and other components in the vertical direction is relatively large. The controller 9 rotates the wrist 4 about the roll axis R. With the rotation of the wrist 4 about the roll axis R, the hand 3 also rotates about the roll axis R. In the example illustrated in FIG. 21, the orientation of the fingers 32 changes to the horizontal direction. The work space H expands in the horizontal direction, while being narrow in the vertical direction. By orienting the fingers 32 in the horizontal direction, the direction in which the fingers 32 project from the hand 3 can be adjusted to a direction with a margin in the work space H. This reduces the size of the hand 3 in the vertical direction, compared to a case where the fingers 32 are oriented downward in the vertical direction. In a case where the work space H has a margin in size, the rotation posture of the hand 3 may be a posture in which the fingers 32 are oriented obliquely downward.

In this manner, the controller 9 can adjust the overall size of the robot arm 2, the hand 3, and the wrist 4 to a size that enables entry into the work space H by changing the rotation posture of the hand 3 about the pitch axis P or the roll axis R to a posture different from that in a lifting/lowering motion.

The direction serving as a reference for adjusting the rotation posture of the hand 3 is not limited to the vertical direction. In a case where the direction in which the work space H is smallest among directions orthogonal to the first direction X in a cross section of the work space H orthogonal to the first direction X is not the vertical direction, the controller 9 adjusts the rotation posture of the hand 3 based on the size of the work space H in the direction in which the work space H is smallest among the directions orthogonal to the first direction X.

The controller 9, specifically the movement controller 95, may change the orientation of the wrist 4 around the roll axis R to change the orientation of the second direction Z in the lifting/lowering motion. In this manner, the direction in which the wrist 4 lifts and lowers the hand 3 in the lifting/lowering motion is adjusted.

FIG. 22 is a front view of the hand 3 and the wrist 4 in a state where the linkage 6 is rotated about the roll axis R. For example, regarding the entry of the hand 3 into the first container C1, the wrist 4 performs a roll motion, thereby changing the orientation of the second direction Z, as illustrated in FIG. 22. That is, the second direction Z tilts with respect to the vertical direction. From this state, when the wrist 4 moves the hand 3 away from the robot arm 2 in the second direction Z, the hand 3 linearly moves obliquely downward. Accordingly, the reach position of the hand 3 can be adjusted in a plane orthogonal to the roll axis R without moving the robot arm 2.

The change of the rotation posture of the wrist 4 about the roll axis R may be executed at any timing in the lifting/lowering motion, whether at the beginning, during, or at the end of the lifting/lowering motion, as long as the hand 3 has not reached the workpiece W yet.

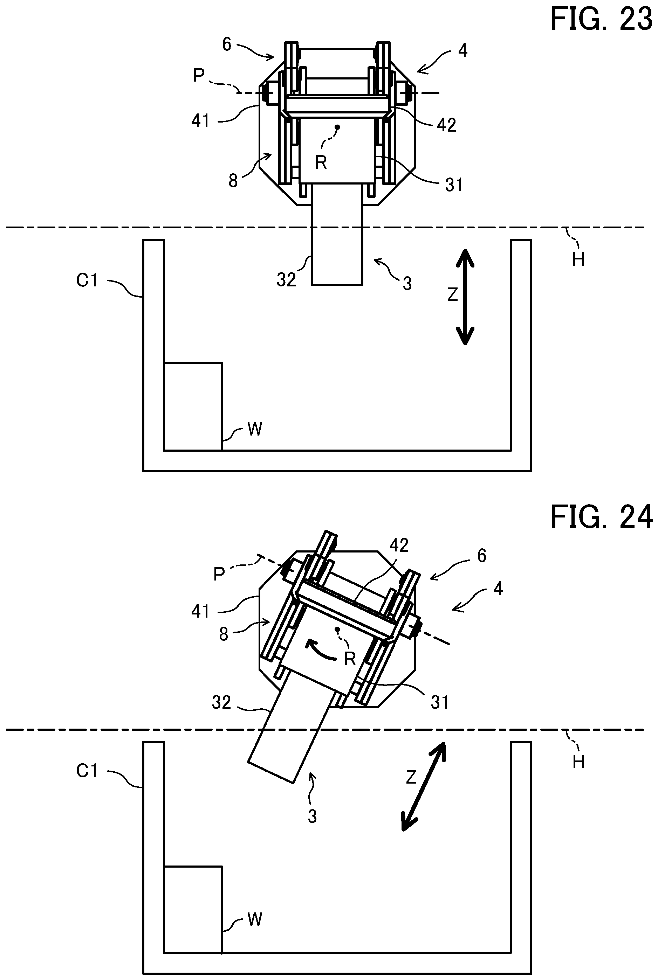

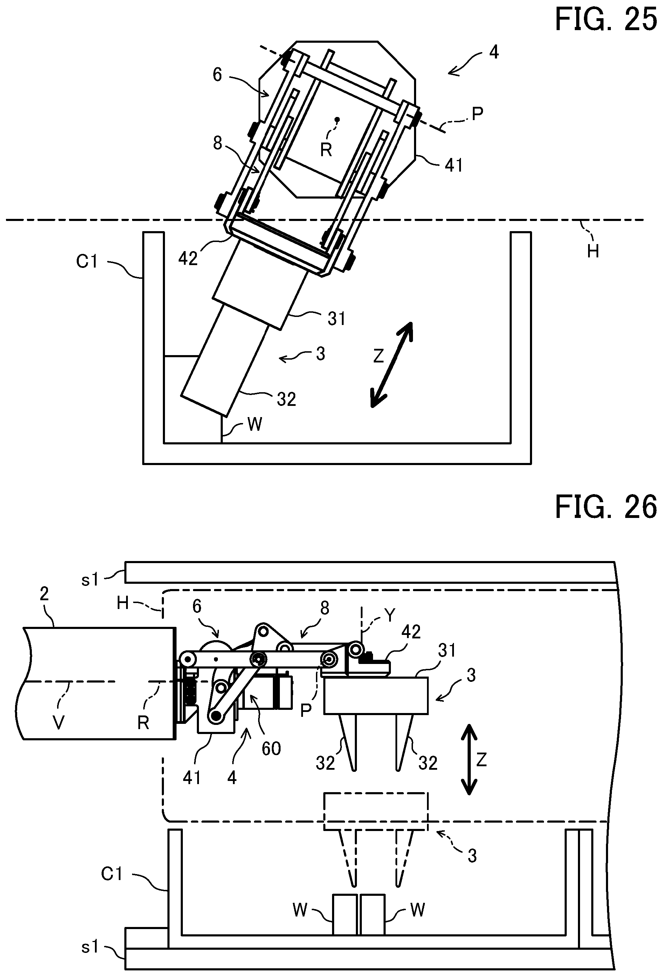

As a result of adjustment of the reach position of the hand 3, the reach range of the hand 3 can be enlarged. FIGS. 23, 24, and 25 are explanatory drawings of a procedure to enlarge the reach range of the hand 3. FIG. 23 is a front view of the hand 3 and the wrist 4 located above the first container C1. FIG. 24 is a front view of the hand 3 and the wrist 4 after a roll motion. FIG. 25 is a front view of the hand 3 and the wrist 4 after a straight-traveling operation. For example, in a case where a workpiece W is located near a side wall of the first container C1, when the hand 3 is moved from above in the vertical direction toward the workpiece W, the hand 3 might interfere with the side wall of the first container C1. In such a case, as illustrated in FIG. 23, the hand 3 is located at a position away from the side wall of the first container C1. Then, as illustrated in FIG. 24, the wrist 4 directs the second direction Z toward the workpiece W near the side wall through a roll motion. Subsequently, as illustrated in FIG. 25, the wrist 4 linearly moves the hand 3 obliquely downward through a straight-traveling operation. In this manner, the hand 3 can reach the workpiece W while avoiding interference with the side wall.

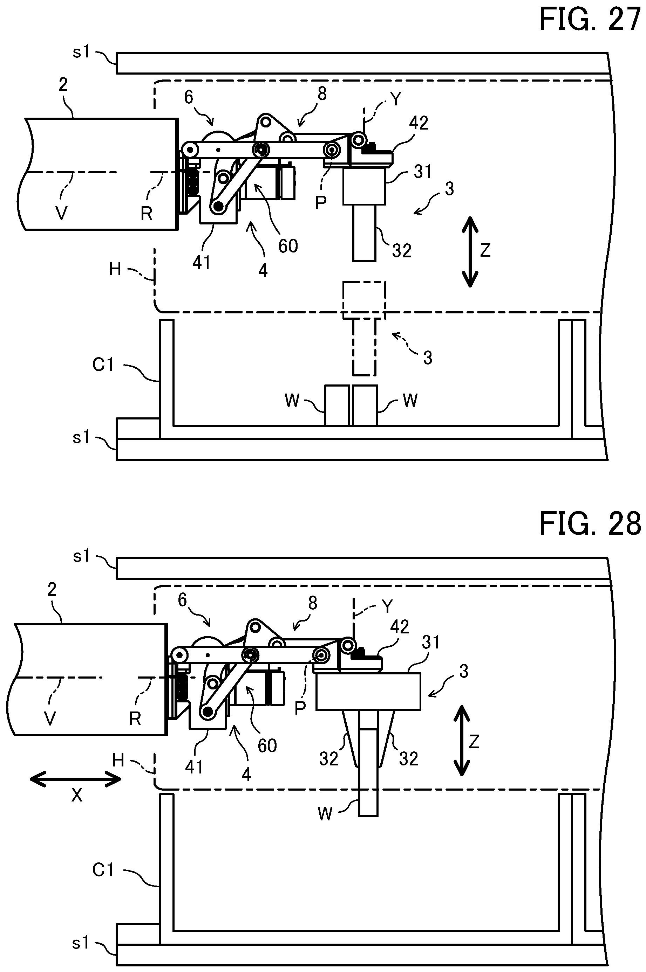

The controller 9, specifically the movement controller 95, may change the rotation posture of the hand 3 about the yaw axis Y in the lifting/lowering motion. With this change, the orientation of the opening/closing direction of the fingers 32 by the hand 3 is adjusted. FIG. 26 is a side view of the hand 3 and the wrist 4 before a yaw motion in picking adjacent workpieces W. FIG. 27 is a side view of the hand 3 and the wrist 4 after the yaw motion in picking the adjacent workpieces W. For example, in some cases, a workpiece W is located adjacent to another object, for example, another workpiece W. In such cases, as illustrated in FIG. 26, when the arrangement direction of workpieces W and the opening/closing direction of the fingers 32 coincide, the fingers 32 might fail to appropriately grip a target workpiece W because of interfere with other workpieces W. A yaw motion of the wrist 4 can make the opening/closing direction of the fingers 32 different from the arrangement direction of the workpieces W, as illustrated in FIG. 27. Accordingly, the fingers 32 can appropriately grip the target workpiece W without interfering with other workpieces W. In this manner, by performing the yaw motion of the wrist 4, the opening/closing direction of the fingers 32 can be adjusted in accordance with a situation around the workpiece W.

The change of the rotation posture of the wrist 3 about the yaw axis Y may be executed at any timing in the lifting/lowering motion, whether at the beginning or during the lifting/lowering motion as long as the hand 3 has not reached the workpiece W yet.

In the retracting motion, the controller 9, specifically the movement controller 95, may change the rotation posture of the hand about the pitch axis P or the roll axis R to a posture different from that in the lifting/lowering motion to contract the robot arm 2 in the first direction X. At this time, in the retracting motion, the controller 9 may change the rotation posture of the hand 3 about the pitch axis P or the roll axis R in accordance with the size of a space through which the hand 3 and the wrist 4 pass in the retracting motion. In this example, the "space through which the hand 3 and the wrist 4 pass in the retracting motion" is the work space H.

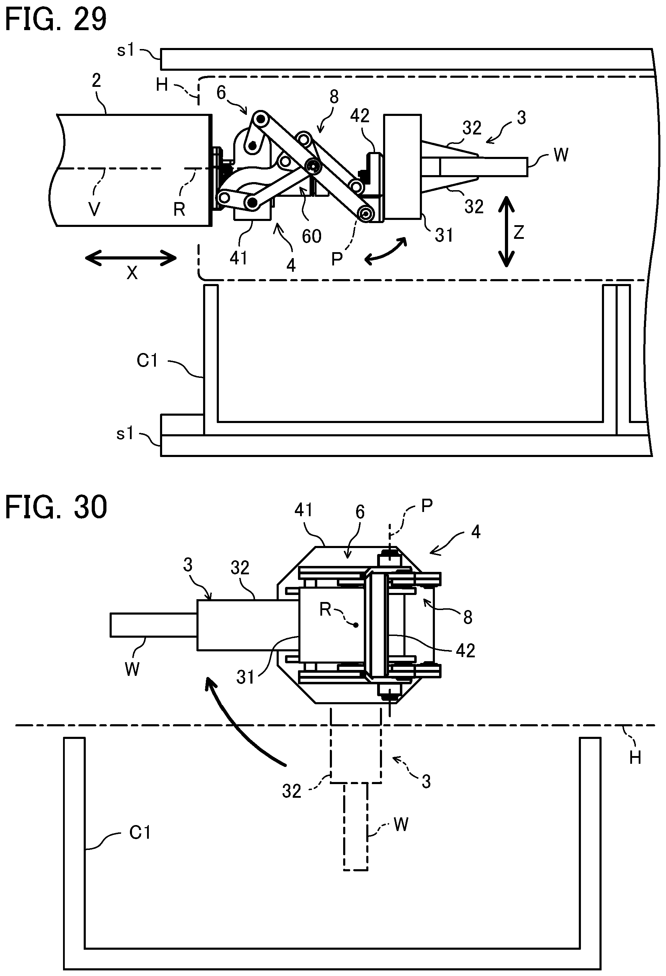

FIG. 28 is a side view of the hand 3 and the wrist 4 in a state where the hand 3 is retracted in the second direction while gripping a workpiece W. FIG. 29 is a side view of the hand 3 and the wrist 4 with the hand 3 gripping the workpiece W rotated about the pitch axis P. In a case where the space through which the hand 3 and the wrist 4 pass in the retracting motion is narrow, highly accurate position control of the hand 3 and other components may be necessary when the robot arm 2 retracts the hand 3 and other components. In some cases, the hand 3 or the wrist 4 may interfere with other objects, for example, the shelf s1 or the first container C1. The controller 9 adjusts the rotation posture of the hand 3 about the pitch axis P or the roll axis R based on the size of the work space H, specifically the size of the work space H in a cross section orthogonal to the first direction X. More specifically, the controller 9 adjusts the rotation posture of the hand 3 based on the size of the work space H in a direction in which the work space H is smallest among directions orthogonal to the first direction X in a cross section of the work space H orthogonal to the first direction X. In this example, since the size of the work space H is smallest in the vertical direction, the controller 9 adjusts the rotation posture of the hand 3 based on the size of the work space H in the vertical direction.

The rotation posture of the hand 3 about the pitch axis P in the lifting/lowering motion is naturally a posture in which the fingers 32 are oriented downward in the vertical direction. In this posture, the workpiece W gripped with the fingers 32 is in a state of being hanged downward. As illustrated in FIG. 28, in a case where the workpiece W is large, the overall size of the hand 3 and the wrist 4, including the workpiece W, is large in the vertical direction. In a case where the overall size of the hand 3 and other components in the vertical direction is large, when the robot arm 2 retracts the hand 3 and other components from the work space H, the workpiece W might interfere with the first container C1 and other components. In the example illustrated in FIG. 29, the controller 9 adjusts the rotation posture of the hand 3 about the pitch axis P. Specifically, the controller 9 rotates the hand 3 about the pitch axis P via the wrist 4 so that the fingers 32 are oriented in the horizontal direction, that is, in the first direction X. This reduces the size of the hand 3 including the workpiece W in the vertical direction. Consequently, the robot arm 2 easily retracts the hand 3 and other components from the work space H. In addition, the controller 9 may also adjust the position of the hand 3 in the vertical direction. When the wrist 4 changes the position of the hand 3 in the second direction Z to a side away from the robot arm 2, the overall size of the robot arm 2, the hand 3, and the wrist 4 in the vertical direction can be reduced. In a case where the work space H has a margin in size, the rotation posture of the hand 3 may be a posture in which the fingers 32 are oriented obliquely downward.

Similarly to the advancing motion, the size of the work space H may be known or may be acquired from images taken with the camera or the like.

The controller 9 may adjust the rotation posture of the hand 3 about the roll axis R. FIG. 30 is a front view of the hand 3 and the wrist 4 in a case where the rotation posture of the hand 3 in the retracting motion is changed by the roll motion. The rotation posture of the hand 3 about the roll axis R in the lifting/lowering motion is naturally a posture in which the second direction Z is oriented in the vertical direction. In this posture, the workpiece W is hanged downward from the hand 3. Thus, the overall size of the hand 3 and other components in the vertical direction is relatively large. The controller 9 rotates the wrist 4 about the roll axis R. With the rotation of the wrist 4 about the roll axis R, the hand 3 also rotates about the roll axis R. In the example illustrated in FIG. 30, the orientation of the fingers 32 changes to the horizontal direction. The work space H expands in the horizontal direction, while being narrow in the vertical direction. By orienting the fingers 32 in the horizontal direction, the direction in which the workpiece W projects from the hand 3 can be adjusted to a direction with a margin in the work space H. This reduces the overall size of the hand 3 including the workpiece W in the vertical direction, compared to a case where the workpiece W is hanged downward. Consequently, the robot arm 2 easily retracts the hand 3 and other components from the work space H. In a case where the work space H has a margin in size, the rotation posture of the hand 3 may be a posture in which the fingers 32 are oriented obliquely downward.

Regarding adjustment of the rotation posture of the hand 3 about the pitch axis P or the roll axis R in the advancing motion or the retracting motion, the controller 9 may change the rotation posture of the hand 3 about the pitch axis or the roll axis R in accordance with the size of the space through which the hand 3 and the wrist 4 pass in the advancing motion or the retracting motion in a case where the hand 3 or the workpiece W contacts another object. The controller 9 predicts contact between the hand 3 or the workpiece W and other objects. Specifically, the controller 9 predicts contact between the workpiece W and other objects based on the size of the space through which the hand 3 and the wrist 4 pass (the size of the work space H in this example) and the size of the workpiece W.

In this manner, the robot 1 moves the hand 3 to a complicated position by combining the advancing motion of the robot arm 2 and the lifting/lowering motion of the wrist 4. In the advancing motion of the robot arm 2, the size other than the size in the first direction X of the robot arm 2 does not change significantly. Accordingly, the hand 3 can easily enter a narrow space in the first direction X while avoiding interference between the robot arm 2 and other objects. After the hand 3 has entered the narrow space in the first direction X, movement of the robot arm 2 may be limited. In particular, in a case where a portion of the robot arm 2 also has entered the narrow space, movement of the robot arm 2 is further limited. In such a situation, the wrist 4 moves the hand 3 in the second direction Z. Accordingly, the hand 3 can be moved in the second direction Z different from the first direction X in a narrow space, without moving the robot arm 2. In this manner, the hand 3 can reach a complicated position while avoiding interference between the robot arm 2 and other objects. Consequently, the movement range of the hand 3 can be enlarged in a narrow space where movement of the robot arm 2 is limited.

In addition, moving the wrist 4 results in smaller and lighter members than moving the robot arm 2. When an operating member is small, the possibility of interference with other members is reduced. When the operating member is light, a driving force for movement is reduced and controllability is enhanced. That is, even in a place other than a complex place, the wrist 4 achieves such advantages.

Movement of the hand 3 in the second direction Z by the wrist 4 is achieved by the linkage 6 including the Chebyshev linkage 60. The amount of linear movement by the Chebyshev linkage 60 is relatively large. That is, it is possible to enlarge a stroke of the hand 3 in the second direction Z while suppressing an increase in size of the linkage 6. The Chebyshev linkage 60 moves by rotational driving of the driving link 61. Thus, the Chebyshev linkage 60 is driven by a motor. For example, linear movement of the hand 3 may also be achieved by a combination of a linear guide and a cylinder. However, a motor has higher controllability than that of a cylinder. By employing the Chebyshev linkage 60, movement of the hand 3 in the second direction Z can be easily and accurately controlled.

In the advancing motion and the retracting motion, by adjusting the rotation posture of the hand 3 about the pitch axis P or the roll axis R, interference of the hand 3 or the workpiece W with other objects can be avoided.

By adjusting the rotation posture of the hand 3 about the roll axis R in the lifting/lowering motion, the reach position of the hand 3 can be adjusted without moving the robot arm 2.

By adjusting the rotation posture of the hand 3 about the yaw axis Y in the lifting/lowering motion, posture of the hand 3 with respect to the workpiece W can be adjusted. For example, orientation of the opening/closing direction of the fingers 33 in with respect to the workpiece W can be adjusted.

The thus-configured robot arm 2 is attached to the lifter 12. The lifter 12 is attached to the mobile base 11. The robot arm 2 is moved by the mobile base 11 and the lifter 12. Accordingly, the position of the hand 3 may also be adjusted by the mobile base 11 and the lifter 12. Further, since the lifter 12 is located in the recess 11c of mobile base 11 and lowers the robot arm 2 to a position below the upper surface 11b of the mobile base 11, the movement range of the robot arm 2 by the lifter 12 can be enlarged.

### <<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the work performed by the robot 1 is not limited to the transfer work. The robot 1 may perform work such as assembly of components. In the case of the transfer work, the robot 1 may pick a workpiece W from the second container C2 and place the workpiece W in the first container C1. That is, the hand 3 may enter a narrow space in placement. The wrist 4 can flexibly move the hand 3 by performing a straight-traveling motion, a pitch motion, a roll motion, and a yaw motion as described above in placing the workpiece W. The wrist 4 may also perform a straight-traveling motion, a pitch motion, a roll motion, and a yaw motion as described above in picking the workpiece W from the second container C2. The workpiece W before and after transfer may not be located in the container. For example, the workpiece W before transfer may be placed on a tray, a pallet, or a conveyor. The workpiece W after transfer may be placed on a tray, a pallet, or a conveyor. The narrow space is not limited to the work space H. The robot 1 can cause the hand 3 to enter various spaces the robot arm 2 can enter.

A treatment performed by the hand 3 is not limited to holding of a workpiece. For example, the treatment by the hand 3 may be machining, welding, coating, or other treatments. Holding of a workpiece by the hand 3 is not limited to gripping and may also be adsorption or the like.

The pitch motion, the roll motion, and the yaw motion by the wrist 4 are not necessary. It is sufficient for the wrist 4 to move the hand 3 at least in a direction intersecting the direction in which the robot arm 2 extends and contracts, that is, in the second direction Z. For example, the wrist 4 may combine at least one of the pitch motion, the roll motion, or the yaw motion with movement in the second direction Z.

The configuration in the wrist 4 that moves the hand 3 in the second direction Z is not limited to the linkage 6. The wrist 4 may move the hand 3 in the second direction Z by a pantograph. Alternatively, the wrist 4 may move the hand 3 in the second direction Z by a linear actuator including a belt, a feed screw, or a rack-and-pinion. Such mechanisms, for example, couple the first base 41 and the second base 42 to each other so that the second base 42 is movable in the second direction Z relative to the first base 41.

The linkage 6 includes two linkages: the first linkage 6A and the second linkage 6B. Alternatively, the linkage 6 may include only one of the first linkage 6A and the second linkage 6B. Alternatively, the linkage 6 may include three or more linkages.

Regarding the roll motion, the rotation body 44 is coupled to the base body 43 of the first base 41 to be rotatable about the roll axis R. Accordingly, the linkage 6, the second base 42, and the hand 3 rotate about the roll axis R. Alternatively, the configuration for the roll motion is not limited to this example. The second base 42 may be a split body rotatable about the roll axis. In this case, the linkage 6 does not rotate about the roll axis R, and the hand 3 rotates about the roll axis R.

Regarding the pitch motion, the second base 42 is coupled to the linkage 6 to be rotatable about the pitch axis P. Accordingly, the hand 3 rotates about the pitch axis P. However, the configuration for the pitch motion is not limited to this example. The first base 41 may be a split body rotatable about the pitch axis. In this case, the linkage 6, the second base 42, and the hand 3 rotate about the pitch axis.

Regarding the yaw motion, the rotation body 46 is coupled to the base body 45 of the second base 42 to be rotatable about the yaw axis Y. Accordingly, the hand 3 rotates about the yaw axis Y. However, the configuration for the yaw motion is not limited to this example. The first base 41 may be a split body rotatable about the yaw axis. In this case, the linkage 6, the second base 42, and the hand 3 rotate about the yaw axis.

The camera 15 may not be located on the hand 3 but may be placed on the shelf board s1 or other places. In a case where the controller 9 detects a workpiece W or a space for entry from an image, the controller 9 may obtain the image not from the camera 15 but the outside.

The determiner 97 may determine interference between the hand 3 or the workpiece W and other objects based on a detection result of a force sensor included in the robot 1. In this case, the determiner 97 determines the contact based on a detection result of the force sensor. For example, the force sensor is located on the robot arm 2, the hand 3, or the wrist 4. When the hand 3 or the workpiece W contacts another object, the force sensor may detect a force or a torque corresponding to the contact. In a case where contact between the hand 3 or the workpiece W and other objects is detected based on the detection result from the force sensor, the controller 9 adjusts the rotation posture of the hand 3 about the pitch axis P or the roll axis R. The sensor for detecting contact is not limited to the force sensor. The sensor for detecting contact may be an acceleration sensor located on the robot arm 2, the hand 3, or the wrist 4, or a current sensor for each motor of the robot arm 2, the hand 3, or the wrist 4. In the case of the acceleration sensor, detection of an acceleration at contact by the acceleration sensor allows the determiner 97 to determine contact between the hand 3 or the workpiece W and other objects. In the case of the current sensor, detection of an increase in motor current by the current sensor allows the determiner 97 to determine contact between the hand 3 or the workpiece W and other objects.

The robot controller 10 may not be a device different from the controller 9 but may be integrated with the controller 9. That is, the controller 9 may also have the function of the robot controller 10.

Functions performed by constitutional elements described herein may be implemented in circuitry or processing circuitry including a general-purpose processor, an application-specific processor, an integrated circuit, an application specific integrated circuit (ASIC), a central processing unit (CPU), conventional circuitry, and/or a combination thereof programmed to perform the functions described herein. A processor includes transistors and other circuits, and is regarded as circuitry or arithmetic circuitry. A processor may be a programmed processor that performs programs stored in a memory.

Circuitry, a unit, and means herein are hardware that is programmed to perform or performs the described functions. The hardware may be any hardware disclosed herein, or any hardware programmed or known to perform the functions described.

If the hardware is a processor considered to be of a type of circuitry, the circuitry, means, or a unit is a combination of hardware and software used to configure the hardware and/or the processor.

The techniques of the present disclosure described above are summarized.
[1] A robot system 100 includes: a robot 1; and a controller 9 that controls the robot 1, the robot 1 includes a robot arm 2 that extends and contracts in a predetermined first direction X, a wrist 4 coupled to the robot arm 2, and a hand 3 coupled to the wrist 4, the wrist 4 moves the hand 3 in a second direction Z intersecting the first direction X by extending the robot arm 2 in the first direction X, and the controller 9 causes the robot 1 to perform an advancing motion of moving the wrist 4 and the hand 3 in the first direction X and a lifting/lowering motion of moving the hand 3 in the second direction Z by the wrist 4 after the advancing motion.

In this configuration, movement of the hand 3 in the first direction X is achieved by extension of the robot arm 2, and movement of the hand 3 in the second direction Z is achieved by the wrist 4. In the extension of the robot arm 2, the size of the robot arm 2 other than the size in the first direction X of the robot arm 2 does not change significantly. Accordingly, in the advancing motion, it is possible to cause the hand 3 and the wrist 4 to enter a narrow space while avoiding interference between the robot arm 2 and other objects. In the lifting/lowering motion, it is possible to move the hand 3 in the second direction Z by the wrist 4 without moving the robot arm 2. Accordingly, in the lifting/lowering motion, it is possible to move the hand 3 to the second direction Z different from the first direction X, while avoiding interference between the robot arm 2 and other objects. In this manner, by combining the advancing motion and the lifting/lowering motion, the movement range of the hand 3 can be enlarged without moving the robot arm 2 significantly. Consequently, the movement range of the hand 3 in a narrow space can be enlarged.

[2] In the robot system 100 of [1], the wrist 4 supports the hand 3 such that the hand 3 is rotatable about at least a pitch axis P or a roll axis R, the pitch axis P extending in a direction intersecting both the first direction X and the second direction Z, the roll axis R extending in the first direction X, and in the advancing motion, the controller 9 changes a rotation posture of the hand 3 about the pitch axis P or the roll axis R to a posture different from that in the lifting/lowering motion to extend the robot arm 2 in the first direction X.

This configuration can avoid interference of the hand 3 with other objects in the advancing motion. Specifically, the hand 3 including the fingers 32 as described above may be in a state where the fingers 32 extend in the second direction Z in the lifting/lowering motion. The hand 3 may be of various types, but in any type, the hand 3 may be in the state of projecting in a direction intersecting the first direction X. In such a case, by rotating the hand 3 about the pitch axis P, the overall size of the hand 3 in a cross section orthogonal to the first direction X can be reduced. Accordingly, the hand 3 can easily enter in the first direction X while avoiding interference between the hand 3 and other objects. Alternatively, by rotating the hand 3 about the roll axis R, the direction in which the hand 3 projects can be adjusted to a direction with a margin with surrounding objects. Accordingly, the hand 3 can easily enter in the first direction X while avoiding interference between the hand 3 and other objects.

[3] In the robot system 100 of [1] or [2], in the advancing motion, the controller 9 changes the rotation posture of the hand 3 about the pitch axis P or the roll axis R in accordance with a size of a space through which the wrist 4 and the hand 3 pass in the advancing motion.

In this configuration, the hand 3 is rotated about the pitch axis P or the roll axis R in accordance with the size of the space through which the hand 3 and the wrist 4 pass, for example, the work space H. Consequently, interference between the hand 3 and other objects in the advancing motion can be easily avoided.

[4] In the robot system 100 of any one of [1] to [3], the wrist 4 supports the hand 3 such that the hand 3 is rotatable about at least a pitch axis P and a roll axis R, the pitch axis P extending in a direction intersecting both the first direction X and the second direction Z, the roll axis R extending in the first direction X, and the controller 9 further causes the robot arm 2 to perform a holding motion of causing the hand 3 to hold a workpiece W after the lifting/lowering motion, and a retracting motion of moving the wrist 4 and the hand 3 in the first direction X by contracting the robot arm 2 in the first direction X after the holding motion, and changes, in the retracting motion, a rotation posture of the hand 3 about the pitch axis P or the roll axis R to a posture different from that in the lifting/lowering motion to contract the robot arm 2 in the first direction X.

In this configuration, the hand 3 holds the workpiece W by the holding motion. Depending on the way of holding, the workpiece W may be in a state of projecting from the hand 3. That is, the overall size of the hand 3 including the workpiece W may be large. In view of this, by rotating the hand 3 about the pitch axis P in the retracting motion, the overall size of the hand 3 including the workpiece W in a cross section orthogonal to the first direction X can be reduced. Accordingly, the hand 3 can easily exit in the first direction X while avoiding interference between the workpiece W and other objects. Alternatively, by rotating the hand 3 about the roll axis R, the direction in which the workpiece W projects can be adjusted to a direction with a margin with surrounding objects. Accordingly, the hand 3 can easily enter in the first direction X while avoiding interference between the workpiece W and other objects.

[5] In the robot system 100 of any one of [1] to [4], in the retracting motion, the controller 9 changes the rotation posture of the hand 3 about the pitch axis P or the roll axis R in accordance with a size of a space through which the wrist 4 and the hand 3 pass in the retracting motion.

In this configuration, the hand 3 is rotated about the pitch axis P or the roll axis R in accordance with the size of the space through which the hand 3 and the wrist 4 pass, for example, the work space H. Consequently, interference between the workpiece W and other objects in the retracting motion can be more accurately avoided.

[6] In the robot system 100 of any one of [1] to [5], in the retracting motion, in a case where a workpiece W held by the hand 3 contacts another object, the controller 9 changes the rotation posture of the hand 3 about the pitch axis P or the roll axis R in accordance with a size of a space through which the wrist 4 and the hand 3 pass in the retracting motion.

In this configuration, the hand 3 is rotated about the pitch axis P or the roll axis R in a case where the workpiece W contacts other objects. The contact of the workpiece W with other objects may be predicted in advance or determined based on actual generation. In a case where the workpiece W does not contact other objects, the hand 3 may not rotate about the pitch axis P or the roll axis R, thus simplifying the motion.

[7] In the robot system 100 of any one of [1] to [6], the wrist 4 is rotatable about a roll axis R extending in the first direction X, and the controller 9 changes an orientation of the second direction Z by changing a rotation posture of the wrist 4 about the roll axis R, in the lifting/lowering motion.

In this configuration, the wrist 4 that moves the hand 3 in the second direction Z rotates about the roll axis R, and thus, the second direction Z rotates about the roll axis R. Accordingly, the orientation of the second direction Z, that is, the direction of movement of the hand 3 by the wrist 4 is changed. Consequently, the reach position of the hand 3 can be adjusted without moving the robot arm 2. In addition, for a workpiece W that is difficult to access from a certain direction, the hand 3 easily access the workpiece W by changing the orientation of the movement direction of the hand 3.

[8] In the robot system 100 of any one of [1] to [7], the wrist 4 supports the hand 3 such that the hand 3 is rotatable about a yaw axis Y extending in a direction intersecting the first direction X, and the controller 9 changes a rotation posture of the hand 3 about the yaw axis Y in the lifting/lowering motion.

With this configuration, the posture of the hand 3 with respect to the workpiece W can be adjusted by rotating the hand 3 about the yaw axis Y. For example, in a case where the hand 3 includes fingers 32 that open and close, the opening/closing direction of the fingers 32 with respect to the workpiece W can be adjusted.

[9] In the robot system 100 of any one of [1] to [8], the robot 1 further includes a mobile base 11 including a box-shaped body 11a, and a lifter 12 located on the mobile base 11 and supporting the robot arm 2 to enable lifting and lowering of the robot arm 2 in a predetermined third direction, the mobile base 11 includes a recess 11c that is recessed downward from an upper surface 11b of the mobile base 11, and the lifter 12 is located in the recess 11c and lowers the robot arm 2 to a position below the upper surface 11b.

In this configuration, the robot arm 2 moves by the movement of the mobile base 11 and lifting/lowering by the lifter 12. The lifter 12 is located in the recess 11c of the mobile base 11 and can lower the robot arm 2 to a position below the upper surface 11b of the mobile base 11. Consequently, the position of the robot arm 2 can be adjusted over a wide range in the third direction.

## Claims

1. A robot system comprising:
a robot; and
a controller that controls the robot, wherein
the robot includes
a robot arm that extends and contracts in a predetermined first direction,
a wrist coupled to the robot arm, and
a hand coupled to the wrist,
the wrist moves the hand in a second direction intersecting the first direction, and
the controller causes the robot to perform an advancing motion of moving the wrist and the hand in the first direction by extending the robot arm in the first direction, and a lifting/lowering motion of moving the hand in the second direction by the wrist after the advancing motion.

2. The robot system according to claim 1, wherein
the wrist supports the hand such that the hand is rotatable about at least a pitch axis or a roll axis, the pitch axis extending in a direction intersecting both the first direction and the second direction, the roll axis extending in the first direction, and
in the advancing motion, the controller changes a rotation posture of the hand about the pitch axis or the roll axis to a posture different from that in the lifting/lowering motion to extend the robot arm in the first direction.

3. The robot system according to claim 2, wherein
in the advancing motion, the controller changes the rotation posture of the hand about the pitch axis or the roll axis in accordance with a size of a space through which the wrist and the hand pass in the advancing motion.

4. The robot system according to claim 1, wherein
the wrist supports the hand such that the hand is rotatable about at least a pitch axis or a roll axis, the pitch axis extending in a direction intersecting both the first direction and the second direction, the roll axis extending in the first direction, and
the controller
further causes the robot to perform a holding motion of causing the hand to hold a workpiece after the lifting/lowering motion, and a retracting motion of moving the wrist and the hand in the first direction by contracting the robot arm in the first direction after the holding motion, and
changes, in the retracting motion, a rotation posture of the hand about the pitch axis or the roll axis to a posture different from that in the lifting/lowering motion to contract the robot arm in the first direction.

5. The robot system according to claim 4, wherein
in the retracting motion, the controller changes the rotation posture of the hand about the pitch axis or the roll axis in accordance with a size of a space through which the wrist and the hand pass in the retracting motion.

6. The robot system according to claim 4, wherein
in the retracting motion, in a case where a workpiece held by the hand contacts another object, the controller changes the rotation posture of the hand about the pitch axis or the roll axis in accordance with a size of a space through which the wrist and the hand pass in the retracting motion.

7. The robot system according to claim 1, wherein
the wrist is rotatable about a roll axis extending in the first direction, and
the controller changes an orientation of the second direction by changing a rotation posture of the wrist about the roll axis, in the lifting/lowering motion.

8. The robot system according to claim 1, wherein
the wrist supports the hand such that the hand is rotatable about a yaw axis extending in a direction intersecting the first direction, and
the controller changes a rotation posture of the hand about the yaw axis in the lifting/lowering motion.

9. The robot system according to claim 1, wherein
the robot further includes
a mobile base including a box-shaped body, and
a lifter located on the mobile base and supporting the robot arm to enable lifting and lowering of the robot arm in a predetermined third direction,
the mobile base includes a recess that is recessed downward from an upper surface of the mobile base, and
the lifter is located in the recess and lowers the robot arm to a position below the upper surface.
